# EUROPEAN PATENT SPECIFICATION

(11) **EP 0 902 103 B1**
(45) Date of publication and mention of the grant of the patent: **29.12.2004**
(21) Application number: 97901834.8
(22) Date of filing: 04.02.1997
(51) Int. Cl.: C23C 22/48, C23C 22/07, C23C 30/00, C23C 22/08

(54) **SURFACE-TREATED METALLIC MATERIAL WITH CORROSION RESISTANCE AND SURFACE TREATMENT USED THEREFOR**
OBERFLÄCHENBEHANDELTES METALLISCHES KORROSIONSBESTÄNDIGES MATERIAL UND OBERFLÄCHENBEHANDLUNG DAFÜR
MATERIAU METALLIQUE A TRAITEMENT DE SURFACE PRESENTANT UNE RESISTANCE A LA CORROSION, ET TRAITEMENT DE SURFACE APPLIQUE

(30) Priority: 05.02.1996 JP 1851996; 05.02.1996 JP 1852096; 19.03.1996 JP 6342796; 19.03.1996 JP 6342896; 15.10.1996 JP 27123896; 25.10.1996 JP 28423796
(43) Date of publication of application: 17.03.1999
(73) Proprietor: NIPPON STEEL CORPORATION, Tokyo 100-71 (JP)
(72) Inventor: SHOJI, Hiromasa, Kawasaki City, Kanagawa 211 (JP); SAKASHITA, Masao, Kawasaki City, Kanagawa 211 (JP); SAKON, Tadashi, Kawasaki City, Kanagawa 211 (JP); TADOKORO, Kenichiro, Kawasaki City, Kanagawa 211 (JP); KANEDA, Yoshihiro, Kawasaki City, Kanagawa 211 (JP)
(74) Representative: VOSSIUS & PARTNER
(86) International application number: PCT/JP1997/000272
(87) International publication number: WO 1997/028291

(56) References cited:
- JP-A- 2 025 579
- JP-A- 2 502 655
- JP-A- 3 064 485
- JP-A- 3 277 790
- JP-A- 4 300 864
- JP-A- 5 195 247
- JP-A- 5 331 658
- JP-A- 50 093 241
- JP-A- 50 116 338
- JP-A- 51 023 448
- JP-A- 51 071 588
- JP-A- 52 063 832
- JP-A- 52 066 839

## Description

The present invention relates to a surface treated metal material having a coating layer with working-follow-up properties or working conformity and excellent corrosion resistance and containing absolutely no hexavalent chromium, as well as to a surface treatment agent therefor.

Coating of chromate films on surfaces as a rust prevention treatment for cold-rolled steel sheets, zinc-plated steel sheets and zinc-based alloy plated steel sheets, aluminum-plated steel sheets, etc. conventionally used for automobiles, household electrical appliances, construction materials and the like, is a common technique. In addition to steel sheets, chromate films are also widely used for petroleum transport pipes and other steel pipes, and for wires and other wiring materials. Aluminum and its alloy surfaces are covered with natural oxides which protect the materials from many types of corrosive environments, but anodic oxidation and chromate treatment are carried out on structural materials for aircraft and the like which require more excellent corrosion resistance and coating adhesion.

Chromate treatment often used for such metal materials includes electrolytic chromate and application-type chromate. Electrolytic chromate treatment has been carried out by cathodic electrolytic treatment of metal sheets using baths containing, for example, chromic acid as the main component, in addition to sulfuric acid, phosphoric acid, boric acid, halogens and various other anions. Application-type chromate treatment, which has been associated with the problem of elution of chromium from the chromate treated metal sheets, has been carried out by first adding an inorganic colloid or inorganic anion to a solution wherein a portion of the hexavalent chromium has been reduced to trivalent, or a solution with a specified hexavalent chromium and trivalent chromium ratio, to prepare the treatment solution, and then dipping the metal sheet therein or spraying the metal sheet with the treatment solution.

Among chromate films, those coating layers formed by electrolysis cannot be said to have sufficient corrosion resistance despite the low elution of hexavalent chromium, and their corrosion resistance is particularly low when considerable film damage occurs during working, etc. On the other hand, metal sheets coated with application-type chromate films have high corrosion resistance, and especially excellent worked portion corrosion resistance, but extensive elution of hexavalent chromium from the chromate film becomes a problem. Although elution of hexavalent chromium is controlled considerably by coating with an organic polymer, it is not sufficient. A method generally known as the resin chromate method, such as disclosed in Japanese Unexamined Patent Publication No. 5-230666, gives an improvement in the control of elution of hexavalent chromium, but it is still impossible to avoid elution of trace amounts.

As a coating method which forms films having the same functions as conventional chromate films but containing absolutely no chromium ions, there is known a method for obtaining a corrosion resistant coating layer of a cerium-containing hydroxide while generating hydrogen gas, by dipping an Al sheet in an acidic aqueous solution of about pH 1 to 3 containing cerium ions, which method is disclosed in Japanese Unexamined Patent Publication (Kohyo) No. 2-502655, a double-salt film of cerium ions, zirconium ions, phosphate ions and fluorine ions on aluminum, which method is disclosed in Japanese Unexamined Patent Publication (Kokai) No. 2-25579, and a zinc phosphate film formed in a zinc ion, phosphate ion and lanthanum compound treatment bath, which method is disclosed in Japanese Unexamined Patent Publication (Kokai) No. 5-331658; however, none of these have adequate working follow-up properties and sufficient corrosion resistance.

EP-A-564 286 discloses a method for a zinc-phosphating metal surface in which a lanthanum compound is added in the phosphating solution to improve the zinc phosphating coating film.

EP-A-411 609 and EP-A-337 075 disclose surface treatment chemicals and a bath for aluminum or its alloy to avoid blackening by boiling water and improve the adhesion property to a polymer coating. In these references, the layer formed by the surface treatment bath is composed of a double salt with the selected metal ion, zirconium ion, phosphate ion and fluorine ion.

EP-A-534 120 discloses a chromium-free protective coating method and a composition for the method. According to this reference oxides and hydroxides of cerium are formed in the protective coating.

It is an object of the present invention to provide a novel technique for surface treated metal materials having corrosion-resistant coating layers with working follow-up properties and excellent corrosion resistance and employing absolutely no hexavalent chromium.

As a result of much diligent research aimed at designing general use films which have been subjected to conversion treatment instead of the existing chromate treatment, in systems containing absolutely no hexavalent chromium, the present inventors have successfully obtained novel and revolutionary inorganic-based chemically treated films which exhibit the unique functions of the individual components, by converting a rare earth element to an oxyacid compound in the form of a paste to give the working-follow-up properties or working conformity, to thus suppress corrosion by its barrier, inhibit cathodic reaction by the rare earth element ions, and induce oxyacid salt film-type passivation and oxide film-type passivation by creating an excess of the oxyacid, to inhibit anodic reaction.

Thus, the object above can be achieved by the features defined in the claims.

The invention is described in detail in connection with the drawings, in which;
Fig. 1 is a schematic drawing showing the relationship between the lanthanum/phosphoric acid mixing ratio and the structure of the corrosion résistant coating, and
Figs. 2 and 3 are graphs showing anode current/potential curves for zinc metal in 0.1 mol/liter NaCl solutions adjusted to pH 8.4.

The present invention will now be explained in more detail.

The film of the invention is designed to contain rare earth elements as oxyacid compounds (including hydrogen oxyacid compounds, same hereunder) to form a paste for sufficient working follow-up properties (i.e., conformity when the substrate is worked), in order to suppress corrosion by its barrier effect, inhibit cathodic reaction due to the rare earth element ions, and induce oxyacid salt film-type passivation and oxide film-type passivation by creating an excess of the phosphoric acid, to inhibit anodic reaction. For stronger suppression of the cathodic reaction, another rare earth element compound, especially a cerium compound, may also be added.

Oxyacid compounds of rare earth elements include compounds of rare earth elements with oxyacid anions such as phosphate anion, tungstate anion, molybdate anion and vanadate anion, and hydrogen oxyacid compounds include those compounds in which hydrogen is present in a part of the cations. Also, the rare earth elements are the 17 elements Sc, Y, La, Ce, Pr, Nd, Pm, Sm, Eu, Gd, Tb, Dy, Ho, Er, Tm, Yb and Lu.

For example, LaPO₄ is the lanthanum phosphate compound, and the corresponding lanthanum hydrogen phosphate compounds are La (H₂PO₄) ₃ and La₂ (HPO₄)₃.

The oxyacid compound and/or hydrogen oxyacid compound of the rare earth element, which is the main component of the corrosion resistant coating of the invention, is theoretically not restricted, but since in paste form amorphous (non-crystalline) inorganic polymers are probably formed, it is believed that a working follow-up property will be exhibited even when the film is formed to greater than a prescribed thickness. Such inorganic coating layers which have working follow-up properties can be used as anti-corrosion barriers. Even though inorganic polymers are formed; the same effect is obtained even if crystalline or amorphous particles are dispersed and present therein.

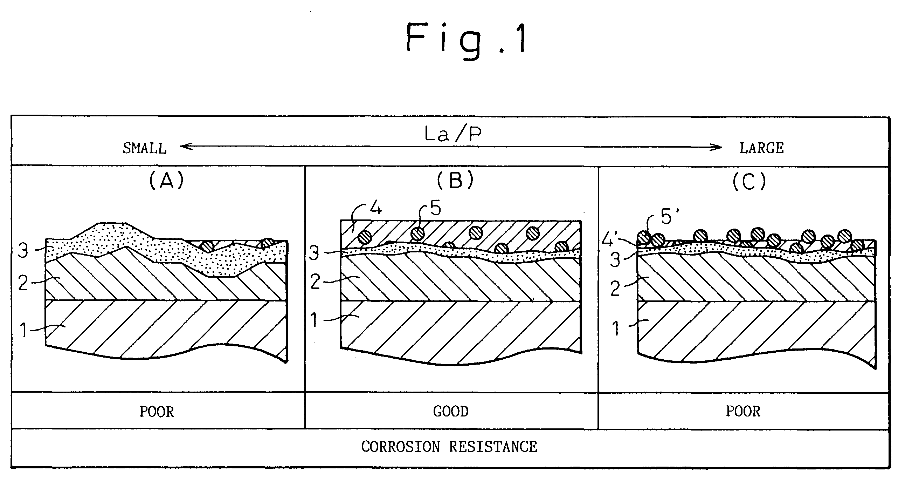

Fig. 1 shows a schematic view of preferred embodiments of coating layers obtained by coating lanthanum/phosphate mixtures on zinc-plated 2 steel sheets 1 with different mixing ratios (La/P) . when La/P is small, a crystalline, hard coating 3 is formed substantially like a zinc phosphate coating, and although the working follow-up property is low (Fig. 1/A), a high La/P ratio gives a matrix 4 coating composed mainly of La (H₂PO₄)₃ and La₂(HPO₄)₃ (Fig. 1/B) which is an inorganic polymer and has working follow-up properties (i.e., working conformity). However, even if the La/P ratio is too high, many crystalline LaPO₄ particles 5' are deposited, reducing the matrix portion 4' and lowering the film formability and working follow-up property (Fig. 1/C).

However, Fig. 1 shows only a schematic of a case according to one method (production method), and the relationship between the specific mixing ratios and coating properties is not universal, being dependent on the type of rare earth element compound and (hydrogen) oxyacid compound and their production method.

The molar ratio of the rare earth element ion and the oxyacid ion (in terms of the oxyacid ion in the case of a hydrogen oxyacid compound or a mixture containing one) in the film of an oxyacid compound or hydrogen oxyacid compound of a rare earth element, or a mixture thereof (oxyacid ion/rare earth element ion), is generally 0.5-100, preferably 2-50 and more preferably 5-10. At less than 0.5, the working follow-up property is inadequate, and at greater than 100 the film formability is reduced. The source of the rare earth element is not particularly restricted, and rare earth element compounds such as oxides, acetates, carbonates, chlorides and fluorides may be mentioned, with oxides being preferred.

Also, the working follow-up property and corrosion resistance are not especially affected even if other rare earth element compounds are included as impurities, such as in misch metal and its precursors. A precursor here refers to a substance which is present from a monazite (phosphate) used as the starting material for lanthanum or cerium until a compound is obtained during smelting and purification thereof. The amount of the rare earth element present in the film may be 1 mg/m² or greater. At less than 1 mg/m² the corrosion resistance is inadequate. Even at greater than 10 g/m² there is no notable improvement in the corrosion resistance, and therefore 10 g/m² is sufficient from an economical standpoint. On the other hand, the film thickness is preferably at least 0.01 µm, and more preferably at least 0.1 µm. At less than 0.01 µm the corrosion resistance will be inadequate. However, since there is little improvement in the corrosion resistance even if the film thickness exceeds 5 µm, it is sufficient at 5 µm from an economical standpoint.

Particularly preferred oxyacid compounds are phosphate compounds and/or hydrogen phosphate compounds, with ortho-phosphate, meta-phosphate or poly-phosphate as the phosphate species. Poly-phosphate based hydrogen phosphate compounds are also suitable.

One or a mixture of two or more compounds may be used as rare earth elements, with lanthanum, cerium and yttrium, especially lanthanum, being preferred. Cerium is effective for inhibiting cathodic reaction. For example, phosphate compounds and hydrogen phosphate compounds of lanthanum, which are the most preferred compounds, can be easily obtained by chemical reaction between lanthanum compounds including water-soluble inorganic salts such as lanthanum chloride and lanthanum nitrate or oxides such as lanthanum oxide or lanthanum hydroxide, and ortho-phosphoric acid, poly-phosphoric acid or phosphate salts such as sodium hydrogen phosphate. Here, it is preferred for the starting material to be a lanthanum compound of a water-soluble and volatile acid such as a chloride or nitrate, to facilitate heat removal of the anions other than the phosphate ion, but lanthanum compounds comprising anti-corrosive anions which are insoluble in water and nonvolatile, such as molybdate salts and tungstate salts, may also be reacted with phosphoric acid.

More preferably, a lanthanum phosphate compound or hydrogen phosphate compound is obtained by reaction between an oxide or hydroxide and phosphoric acid. Alternatively, a surface layer obtained by reaction of particles of lanthanum oxide or lanthanum hydroxide with phosphoric acid under relatively mild conditions may be used alone as the phosphate compound mixture. Here, when the lanthanum compound and phosphoric acid coexist, the lanthanum phosphate LaPO₄ may exist alone as a stable phosphate compound, but since oxides and hydroxides of lanthanum cannot exist alone, particle surfaces of oxides and hydroxides must be in admixture with phosphate compounds or hydrogen phosphate compounds. They may also be natural phosphate compounds produced as minerals.

The corrosion resistant coating layer of the invention may also contain, as added components, oxides, hydroxides, halides, carbonates, sulfates, nitrates and organic acid compounds of rare earth elements, particularly cerium. These compounds, especially tetravalent cerium ions and cerium compounds, are said to have an effect of reinforcing the inhibiting effect on the cathodic reaction. The amount of such an added component is no more than 50-fold, preferably no more than 10-fold, and more preferably no more than 5-fold, in terms of the molar ratio of the added rare earth element with respect to the number of moles of the rare earth element of the oxyacid compound and/or hydrogen oxyacid compound. If the amount of the added component is too great, the film formability is lowered and a film with sufficient working follow-up properties cannot be obtained. Even when the cerium compound is an oxyacid compound or hydrogen oxyacid compound, its addition to the matrix of an oxyacid compound or hydrogen oxyacid compound of the other rare earth element has the effect of reinforcing the cathodic reaction-inhibiting effect, and therefore it may be added in a molar ratio of 50-fold or less with respect to the other rare earth element.

The organic-based corrosion inhibitor adheres to the metal surface, and forms a complex during elution of the metal ion and trapping it, thus having the effect of inhibiting further progress of ionization. Organic-based corrosion inhibitors which may be used include compounds possessing, in the molecular structure a functional group (=O -NH₂, =NH, =N-, =S, -OH, etc.) required to form metal complex bonds, and a functional group (-OH, =NH, - SH, -CHO, -COOH, etc.) which can form a covalent bond with the metal surface. Incidentally, the organic-based corrosion inhibitor included in the film is preferably a compound which is poorly water-soluble. The reason is that the corrosion inhibiting effect is exhibited when the organic-based corrosion inhibitor dissolves in trace amounts by water passing through the film, and therefore if it is highly water soluble it will easily elute out when water passes through the film, causing the effect to not be exhibited, or resulting in inadequate duration of the effect.

Specific examples of poorly water-soluble organic-based corrosion inhibitors possessing both of the aforementioned functional groups include formylated derivatives of N-phenyl-dimethylpyrrole, thioglycolic acid esters represented by HS-CH₂COOCₙCH₂ₙ₊₁ (n is an integer of 1-25) and their derivatives, α-mercaptocarboxylic acids represented by CₙH₂ₙ(SH)COOH (n is an integer of 1-25) and their derivatives, quinoline and its derivatives, triazinedithiol and its derivatives, gallic acid esters and their derivatives, nicotinic acid and its derivatives, and catechol and its derivatives.

An electroconductive polymer can also be used as an organic-based corrosion inhibitor with a different anti-corrosion mechanism. This is a molecule of a same repeating unit with n-electron conjugated bonds spread throughout the entire molecule, of which polyacetylene, polyaniline, polythiophene and polypyrrole are known. By adding a dopant such as barium sulfate, it is possible to confer electric conductivity thereto. The anti-corrosion effects of electroconductive polymers are not understood in detail, but they are assumed to exhibit corrosion resistant current rectification effects and oxygen reduction inhibiting effects at interfaces due to their electroconductivity, and act as cathode corrosion inhibitors.

These organic-based corrosion inhibitors may be used alone or in mixtures of 2 or more, and the amount thereof added is 0.001-2, preferably 0.01-1 and more preferably 0.02-0.5 in terms of the molar ratio of organic-based corrosion inhibitor to the rare earth element ion (organic-based corrosion inhibitor/rare earth element ion). If the molar ratio is less than 0.001 the effect of addition will be insufficient, and if it is greater than 2 the adhesion will be inadequate.

Also, the form of these organic-based corrosion inhibitors in the film is not particularly restricted, and they may be included in the film by a method whereby they are added and mixed directly into the treatment solution. Alternatively, they may be predissolved in the phosphate and then added to the treatment solution, or they may be completely dissolved in an alcohol such as ethanol or isopropyl alcohol after which deionized water is added dropwise to form a fine colloid which is added to the treatment solution.

In addition to a rare earth element compound such as a cerium compound, etc., an effect of reinforcing the barrier effect of the corrosion resistant coating layer or suppressing elution of the added components can be obtained, or the cathode anticorrosion or anode anticorrosion can be reinforced, by further adding SiO₂, Cr₂O₃, Cr(OH)₃, Al₂O₃, calcium hydroxide, calcium carbonate, calcium oxide, zinc phosphate, zinc hydrogen phosphate, potassium phosphate, potassium hydrogen phosphate, calcium phosphate, calcium hydrogen phosphate, calcium silicate, zirconium silicate, aluminum phosphate, aluminum hydrogen phosphate, titanium oxide, zirconium phosphate, zirconium hydrogen phosphate, sulfuric acid, sodium sulfate, sodium hydrogen sulfate, phosphoric acid, sodium phosphate; sodium hydrogen phosphate, etc.

The metal material which is the object of the invention is not particularly restricted, and application may be made to surface treated steel sheets and cold-rolled steel sheets, for example fused zinc-plated steel sheets, fused zinc-iron alloy-plated steel sheets, fused zinc-aluminum-magnesium alloy-plated steel sheets, fused aluminum-silicon alloy-plated steel sheets, fused lead-tin alloy-plated steel sheets and other fused plated steel sheets, zinc electroplated steel sheets, zinc-nickel alloy electroplated steel sheets, zinc-iron alloy electroplated steel sheets, zinc-chromium alloy electroplated steel sheets and other electroplated steel sheets, as well as zinc, aluminum and other metal sheets. Further applications include other forms of materials in addition to metal sheets, such as metal wire, metal pipes and the like.

A typical process for producing a surface treated metal material film according to the invention involves thoroughly mixing the rare earth element compound and the oxyacid, heat treating the mixture (100-200°C, 0.5-24 hours) and adding an organic-based corrosion inhibitor to the resulting paste product if necessary and thoroughly mixing. Added components such as cerium compounds and a sufficient amount of water are also added if necessary. Addition of added components and water can increase the corrosion resistance and film formability. The treatment solution is applied to the metal material, dried and heat treated (for example, at a metal material temperature of 100-200°C for 30 seconds to 1 hour) to obtain the desired surface treated metal material.

According to one aspect of the present invention there is provided a surface treatment agent which comprises 0.05-4 mol/kg of a rare earth compound in terms of the rare earth element such as lanthanum or cerium, and 0.5-100 moles of a phosphate compound and/or hydrogen phosphate compound in terms of H₃PO₄ to one mole of the rare earth element.

A rust-preventing coating layer containing no hexavalent chromium and a process for its production are disclosed in International Patent Application Disclosure (Kohyo) WO88/06639, whereby trivalent cerium ion dissolved in a treatment solution is deposited as a hydroxide on the surface of a metal material by cathode reaction, and then hydrogen peroxide is used for oxidation to tetravalency to obtain a CeO₂ layer with an excellent rust prevention property. The coating layer obtained by this process has poor adhesion to metal materials, and it lacks long-lasting corrosion resistance.

In addition, this CeO₂ film can be expected to have absolutely no working follow-up properties, and this limits its use considerably. Japanese Unexamined Patent Publication (Kokai) No. 5-331658 discloses a surface treatment solution composed mainly of zinc ion, phosphate ion, a lanthanum compound and a film conversion accelerator, and a zinc phosphate treatment process, as a surface treatment process whereby an electrodeposition coating is applied to a metal surface to form a zinc phosphate film with excellent coating adhesion and corrosion resistance; however, the main gist of the disclosure is zinc phosphate treatment by coating, and since the disclosed lanthanum metal concentration contained in the solution is 0.001-3 g/liter, i.e. in terms of the molar concentration, a low value of 7 x 10⁻⁶ to 0.22 moles/liter, despite the inclusion of the lanthanum compound in the zinc phosphate treatment film it has not been possible to achieve the high anti-corrosion function with the film alone, as with conventional chromate films.

The surface treatment agent and treatment bath for aluminum or its alloy disclosed in Japanese Unexamined Patent Publication No. 2-25579 contains cerium ion, zirconium ion, phosphate ion and fluoride ion, and aluminum is etched by the fluoride ion and forms a highly corrosion resistant film with the cerium, zirconium, phosphate and fluoride ion present in the solution; however, the solution composition involves the etching which is limited to the materials of aluminum and its alloys, while the effect is achieved in the low concentration ranges of 10-1000 ppm for cerium ion and 10-500 ppm for phosphate ion.

Jour. Electrochemical Soc. 1991, Vol.138, p.390 describes inhibition of soft steel anode dissolution by addition of trivalent cerium ion to a corrosion resistant solution, while Corrosion Sci. 1993, Vol.34, p.1774 discloses notable inhibition of reduction of oxygen dissolved in solution using stainless steel which has been subjected to ion implantation with cerium ion under vacuum, although this is not industrially practical. As exemplified by these prior art techniques, cerium is well-known to be effective for improving the corrosion resistance of metal materials, but there is a need for a surface treatment agent which can be applied to metal materials in general and which is suitable for industrial mass production.

In order to solve this problem, the present inventors have diligently studied surface treatment agents which form corrosion resistant coating layers containing no hexavalent chromium and, as a result, have discovered the surface treatment agent described above, which is composed mainly of a rare earth element such as lanthanum or cerium, and phosphoric acid.

For convenience in explanation, lanthanum will be referred to as the rare earth element; the surface treatment agent is a surface treatment agent for metal materials which is characterized by being composed mainly of a lanthanum compound and phosphoric acid and a diluting agent, with the lanthanum compound present as a phosphate compound, hydrogen phosphate compound, oxide, hydroxide or a mixture thereof, and by further containing additives such as another rare earth element compound, particularly a cerium compound, and an organic-based corrosion inhibitor. The concentration of the lanthanum compound in the surface treatment agent is the number of moles of lanthanum contained in 1 kg of the surface treatment agent. The number of moles of lanthanum per 1 liter of surface treatment agent is not used because of the high amount of lanthanum compound and phosphoric acid in the treatment agent and the wide range of relative density of the treatment agent, which makes it difficult to express it in terms of volume concentration. The phosphoric acid in the treatment agent refers to phosphate ion and hydrogen phosphate ion which form ortho-phosphoric acid, meta-phosphoric acid, poly-phosphoric acid and phosphate compounds, and its concentration will be expressed in terms of the molar ratio of H₃PO₄ with respect to lanthanum.

The phosphate compound or hydrogen phosphate compound of lanthanum which is one of the main components of the treatment agent can be easily obtained by chemical reaction between a lanthanum compound, for example an inorganic salt such as lanthanum chloride or lanthanum nitrate or an oxide such as lanthanum oxide or lanthanum hydroxide, and an ortho-phosphoric acid, poly-phosphoric acid or meta-phosphoric acid or a phosphate salt such as sodium hydrogen phosphate. Here, it is preferred for the starting material to be a lanthanum compound of a volatile acid such as a chloride or nitrate, to facilitate heat removal of the anions, but lanthanum compounds comprising anti-corrosive anions which are nonvolatile, such as molybdate salts and tungstate salts, may also be reacted with phosphoric acid. More preferably, a lanthanum phosphate compound or hydrogen phosphate compound is obtained by reaction between an oxide or hydroxide and phosphoric acid. Alternatively, a surface layer alone of the phosphate compound mixture obtained by reaction of particles of lanthanum oxide or lanthanum hydroxide with a phosphoric acid under relatively mild conditions may be used. They may also be natural phosphate compounds produced as minerals.

The surface treatment agent is composed mainly of a lanthanum compound and phosphoric acid, and more specifically it is composed mainly of a phosphate compound, hydrogen phosphate compound, oxide or hydroxide of lanthanum or a mixture thereof and phosphoric acid, in combination with water or a mixture of water and a water-soluble organic solvent as a diluting agent. The organic solvent selected is usually methanol or ethanol for the purpose of reducing the viscosity of the surface treatment agent and increasing the accelerated drying effect. The lanthanum compound used as the starting material for the surface treatment agent may also include many other rare earth element compounds, for example, yttrium, neodymium and cerium, derived from rare earth ores during production and purification and their presence is not a hindrance. The phosphoric acid used is ortho-phosphoric acid, meta-phosphoric acid, poly-phosphoric acid or a mixture thereof. Here, poly-phosphoric acid with the average molecular formula H₆P₄O₁₃ is a tetramer of H₃PO₄, i.e. 4 moles of H₃PO₄ in one mole of the poly-phosphoric acid.

The concentration of the lanthanum compound contained in the surface treatment agent is characterized by being 0.05-4 mol/kg in terms of lanthanum. The lower limit of 0.05 mol/kg for the concentration of the lanthanum compound is the minimum concentration required to coat a metal material with a lanthanum compound/phosphoric acid-based film having the same excellent corrosion resistance as a chromate film, and it is more preferably 0.1 mol/kg or greater. The upper concentration limit of 4 mol/kg is the upper limit which can give a relatively hard paste-form treatment agent comprising a lanthanum compound, phosphoric acid and a slight amount of diluting agent, to form a uniform coating layer on a metal material surface, and the lanthanum compound concentration is more preferably no greater than 2 mol/kg.

Also, the major components of the surface treatment agent are the lanthanum compound and phosphoric acid, and it is characterized by containing 0.5-100 moles of phosphoric acid in terms of H₃PO₄ to one mole of the lanthanum compound in terms of lanthanum. The lower limit for the molar ratio or phosphoric acid to lanthanum is the minimum phosphoric acid necessary to coat a metal material surface with the lanthanum compound. Further lowering of the proportion of phosphoric acid will result in a lack of phosphate ions to contribute to adhesion with the metal material surface, due to consumption of phosphate ions as they react with the particle surfaces of the lanthanum oxide or hydroxide compound, thus producing lower corrosion resistance, and in particular, the working follow-up property of the film will become notably inadequate resulting in lower worked portion corrosion resistance. In order to obtain a film with excellent corrosion resistance, the molar ratio of phosphoric acid to lanthanum should be at least 0.5 , and especially for obtaining films with excellent worked portion corrosion resistance, it is preferably at least 2, and more preferably at least 5. Such an excess of phosphoric acid is effective for forming the lanthanum hydrogen phosphate compound, while the metal element in the metal material surface also reacts with zinc, for example, to form a zinc phosphate compound, thus increasing the adhesion of the coating layer and having the effect of improving the corrosion resistance of the coating layer composed mainly of the lanthanum compound and phosphoric acid.

The surface treatment agent for metal materials according to the invention may also contain another rare earth compound, such as a cerium compound, and an organic-based corrosion inhibitor for a still greater rust-prevention effect of the resulting coating layer. The cerium compound added may be one or more compounds selected from among phosphate, hydrogen phosphate, oxide, hydroxide, halide, carbonate, sulfate, nitrate, organic acid compounds and the like, and the valency of the selected cerium may be 3, 4 or a combination thereof. The amount of the added cerium compound is from a molar ratio of 1 to 0.001 in terms of cerium to lanthanum. If the molar ratio of cerium to lanthanum is high, for example 1-0.1, it becomes a major constituent component of the coating layer together with the lanthanum compound and phosphoric acid, and therefore a cerium compound with low solubility, such as a phosphate, hydrogen phosphate, oxide, hydroxide or mixture thereof, is preferably selected. At a molar ratio of 0.1-0.001, compounds with low solubility, as well as soluble cerium compounds such as the aforementioned halides, may also be preferably selected.

The organic-based corrosion inhibitor may be one of the compounds mentioned previously.

The amount of the organic-based corrosion inhibitor to be added is at a molar ratio of 2-0.001 to the lanthanum, and the molar ratio for addition is selected not only for reinforcement of the corrosion inhibiting effect but also depending on the composition of the surface treatment agent and the method of forming the coating layer. For example, in the case of an organic-based corrosion inhibitor which strongly binds to the metal ion which corrodes out of the metal material, such as a combination with a quinoline derivative, an effect can be achieved at a low concentration with a molar ratio to lanthanum of 0.01-0.001.

In the case of a type of corrosion inhibitor which adheres to the metal material surface to inhibit anodic reaction, such as a formylated derivative of N-phenyl-dimethylpyrrole, a high proportion at a molar ratio of 0.01 or greater is advantageous if the purpose of addition is especially that of suppressing metal dissolution and generation of hydrogen during the process of forming the coating layer. Also, a molar ratio to lanthanum of 0.1 or greater may be used if the purpose of addition is for the organic-based corrosion inhibitor to also constitute one of the main components of the coating layer, and for example by adding the electroconductive polymer polyaniline, it is possible to confer electroconductivity to the coating layer while also giving it a corrosion resistant function. If the molar ratio is less than 0.001, the effect of adding the organic-based corrosion inhibitor will be inadequate, and at greater than 2 the adhesion with the coating layer will be insufficient and the working follow-up property will be impaired.

The molar ratio of the organic-based corrosion inhibitor with respect to the lanthanum is also selected based on the desired thickness of the film layer, and for example when forming a thick coating layer for strongly corrosive environments, a sufficient effect can be achieved since the absolute amount of the organic-based corrosion inhibitor in the coating layer is high even if its molar ratio to lanthanum is low and on the order of 0.01. On the other hand, when using a diluted treatment agent with a low lanthanum concentration for the purpose of forming a thin coating layer for weakly corrosive environments, the organic-based corrosion inhibitor is preferably present at a high molar ratio of 0.1-2 with respect to lanthanum.

The above explanation has been made with lanthanum selected as the rare earth element, but the same effect of the treatment agent of the invention is achieved even if lanthanum is replaced with another rare earth element such as cerium. When lanthanum is replaced with cerium, a lanthanum compound is preferred as the other rare earth compound used in combination therewith.

This surface treatment agent is a surface treatment agent for metal materials characterized by being composed mainly of a rare earth element compound and phosphoric acid, with water or a mixture of water and a water-soluble organic solvent as a diluting medium. Diluting mediums include the water included in the starting material used in the process for producing the surface treatment agent, the water or organic solvent used for dissolution of the starting material, and the water or organic solvent for dilution of the original treatment agent. Depending on the relative amount of the diluting agent with respect to the rare earth element compound, the phosphoric acid, the other rare earth element compound and the organic-based corrosion inhibitor, the surface treatment agent will exhibit a hard paste form, a soft paste form, a colloid form or a solution form with low solid dispersion, and the range of the dilution may be determined based on the degree of corrosion resistance desired for the film and the method of coating the metal material surface with the film.

For example, surface treatment agents with a low molar ratio of phosphoric acid to the rare earth element and a high rare earth element concentration are effective for forming highly corrosion resistant films of 1-10 µm thickness by coating methods. If the degree of dilution is increased by addition of water or a water-soluble organic solvent, surfaces can be coated with films of 0.1-1 µm by spray methods. The degree of dilution may also be increased for coating of films of 0.1 µm and less by dipping methods.

This treatment agent exhibits strong acidity, but the hydrogen ion concentration (pH) may optionally be adjusted depending on the purpose or the type of metal material to be surface treated.

An added component such as SiO₂ or Al₂O₃ mentioned above may also be dispersed in the treatment agent for the purpose of supplementing the rust-preventing effect of a coating layer which has the rare earth element compound and phosphoric acid as the main components and further contains another rare earth element compound and an organic-based corrosion inhibitor.

The method for applying the present invention to these metal materials is not particularly restricted, and any conventional publicly known method may be used including dipping, spraying and painting, while the method of drying may be appropriately selected within a temperature range of from room temperature to a high temperature of about 300°C, depending on the performance demanded for the coating layer, the treatment agent composition and the method of forming the coating layer.

### Examples

### [Examples 1-6]

### (Preparation method for treatment solution)

### Example 1

[1] After thoroughly mixing 32.6 g of lanthanum oxide with 69.2 g, 115.3 g and 173.0 g of phosphoric acid (85%), the mixtures were heated at 100-200°C for 0.5 to 24 hours, and the resulting paste-like products were used as treatment solutions (Samples No.1 to 3 in Table 1).
   To treatment solution No.2 there were added lanthanum hydroxide, cerium oxide, cerium hydroxide, cerium chloride and cerium acetate each with a molar ratio of 1:10 for cerium to lanthanum, and these were mixed to make treatment solutions (No.4 to 8 in Table 1).
[2] In [1] above, the phosphoric acid was replaced with 261.0 g of an aqueous ammonium tungstate solution (4%) as 5(NH₄)₂O•12WO₃•5H₂O, 176.6 g of an ammonium molybdate solution (28%) as (NH₄)₆ •Mo₇O₂₄ • 4H₂O and 117.0 g of an aqueous ammonium vanadate solution (5%), as NH₄•VO₃ which were added and mixed therewith to give paste-like products (Samples No. 9, 15 and 21 in Table 1), and then lanthanum hydroxide, cerium oxide, cerium hydroxide, cerium chloride and cerium acetate were combined therewith in the same manner as in [1] above (Samples No.10-14, 16-20 and 22-26 in Tables 1 and 2).

### Example 2

Treatment solutions (Samples No. 27-52 in Table 2) were prepared in the same manner as Example 1, except that 23.5 g of cerium phosphate was used instead of lanthanum oxide.

### Example 3

Treatment solutions (Samples No. 53-78 in Table 3) were prepared in the same manner as Example 1, except that 30.3 g of yttrium chloride hexahydrate was used instead of lanthanum oxide.

### Example 4

Treatment solutions (Samples No. 79-104 in Table 4) were prepared in the same manner as Example 1, except that 39.6 g of neodymium chloride hexahydrate was used instead of lanthanum oxide.

All of the reagents used in Examples 1-4 were commercially available products.

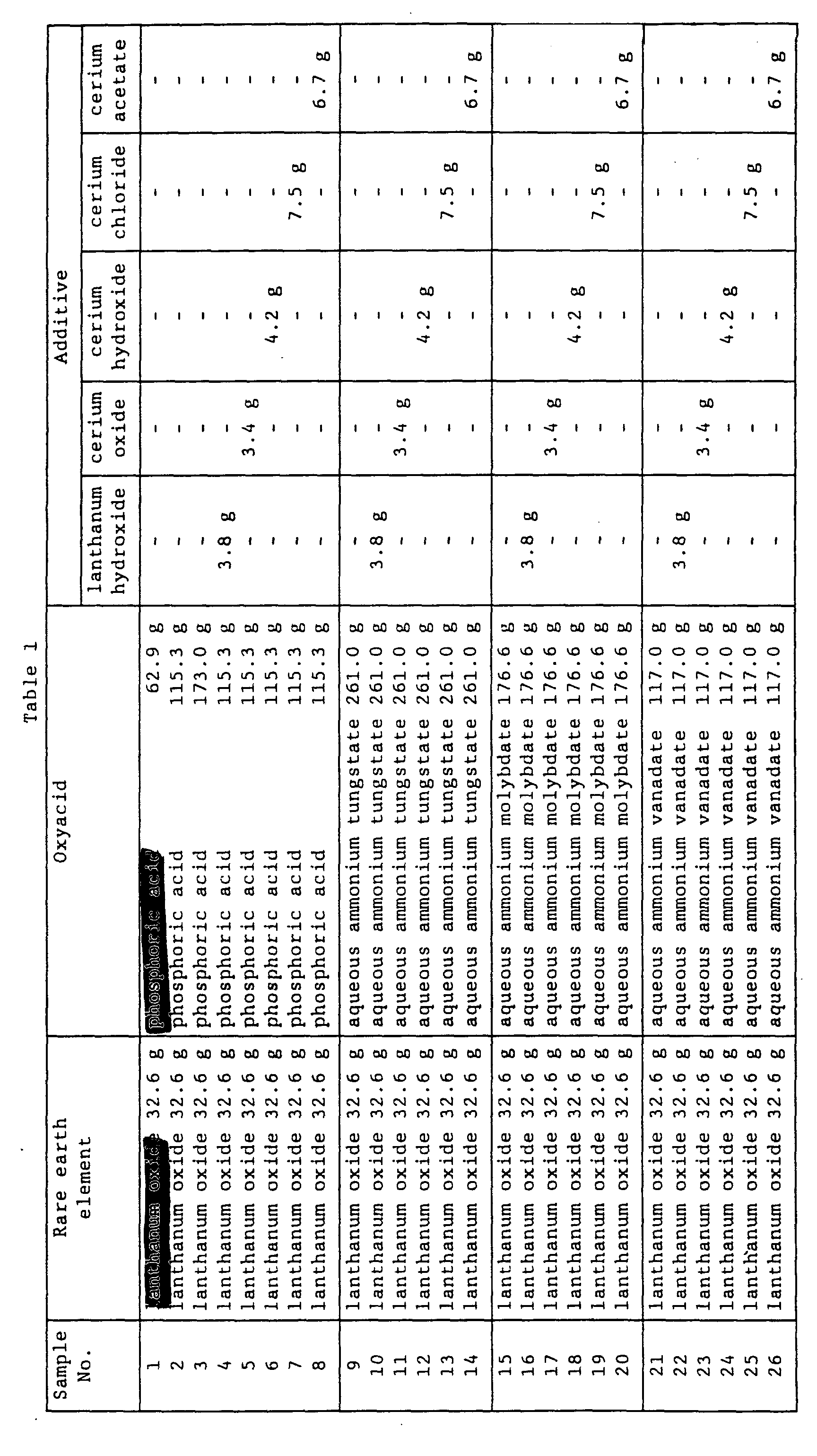

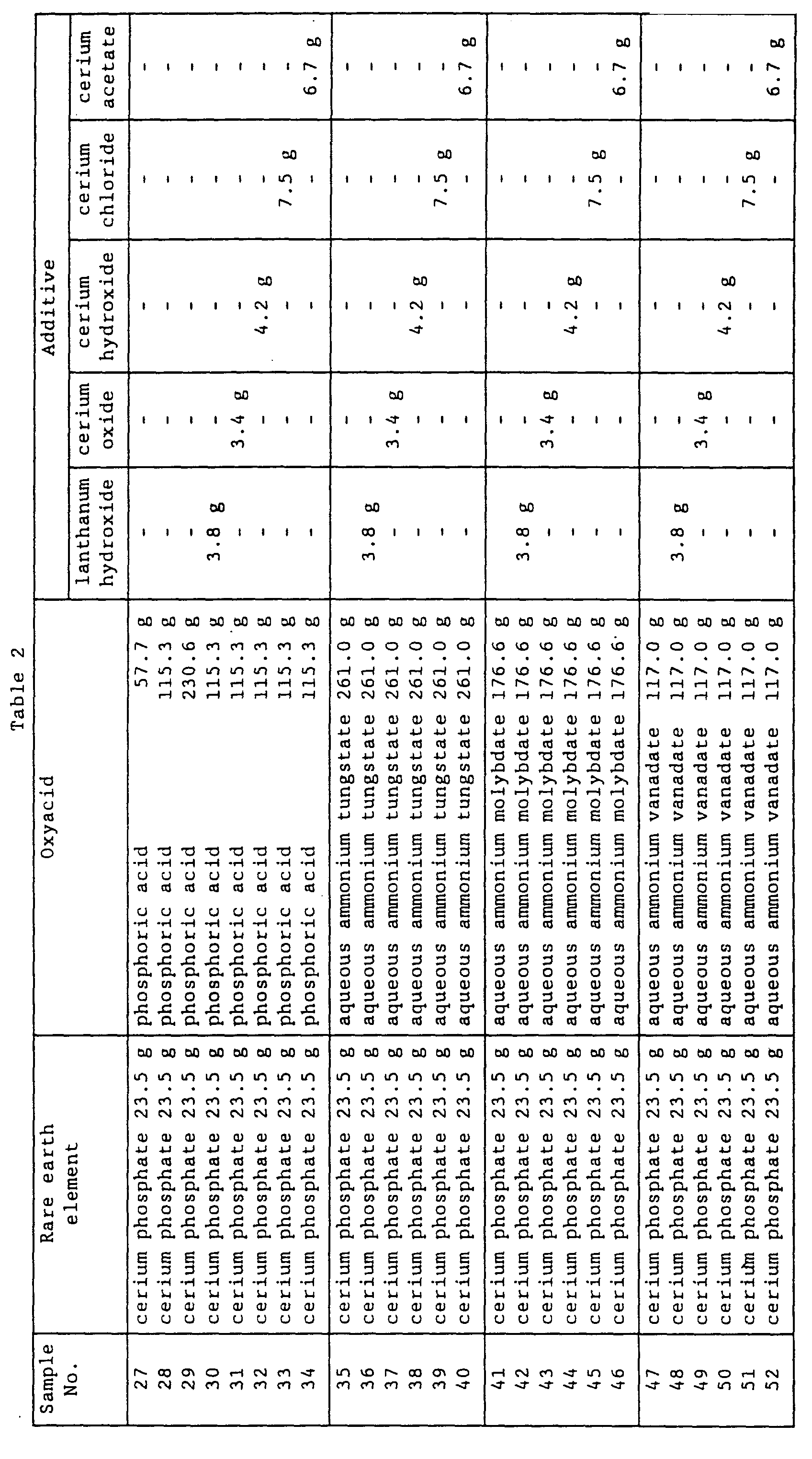

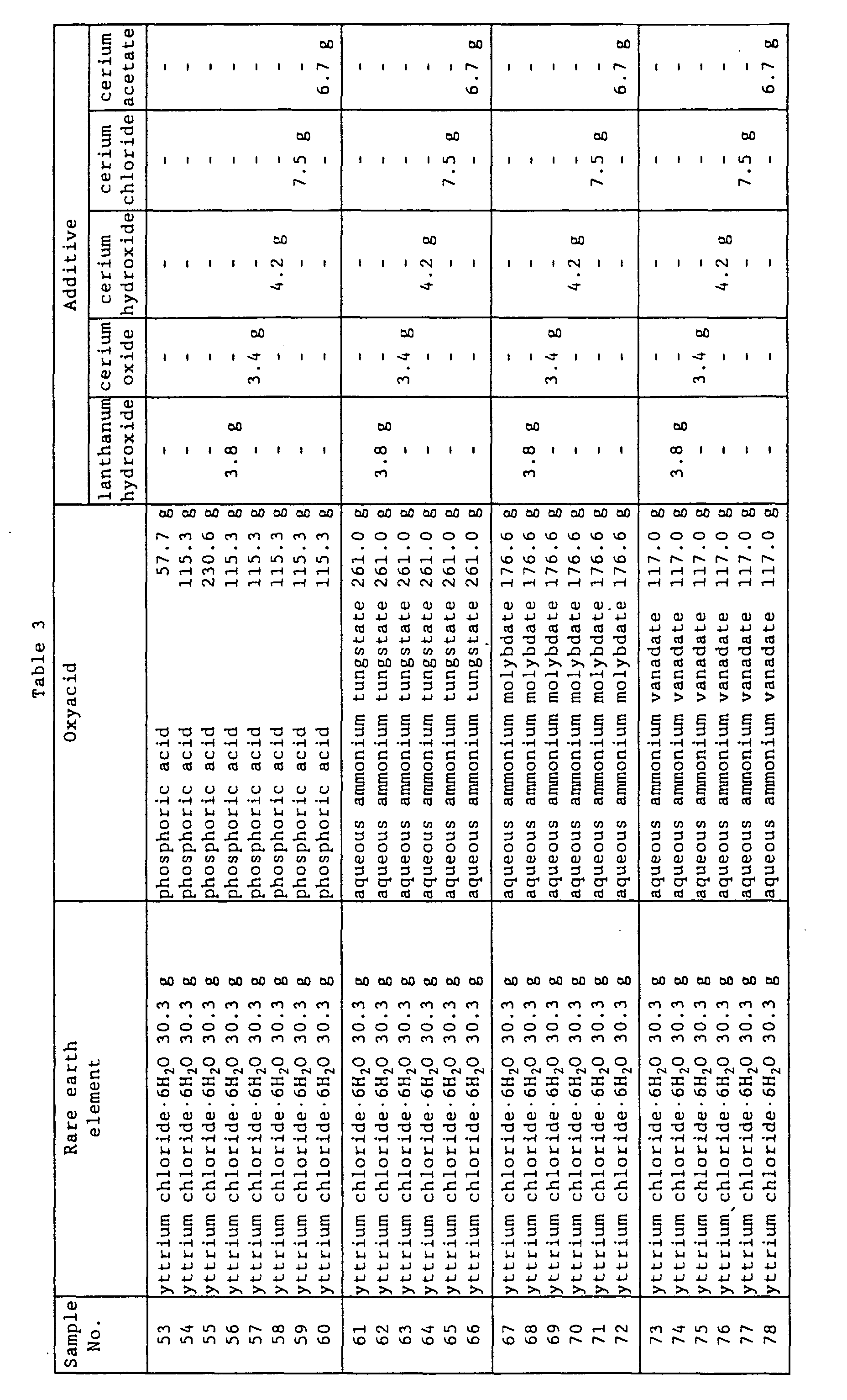

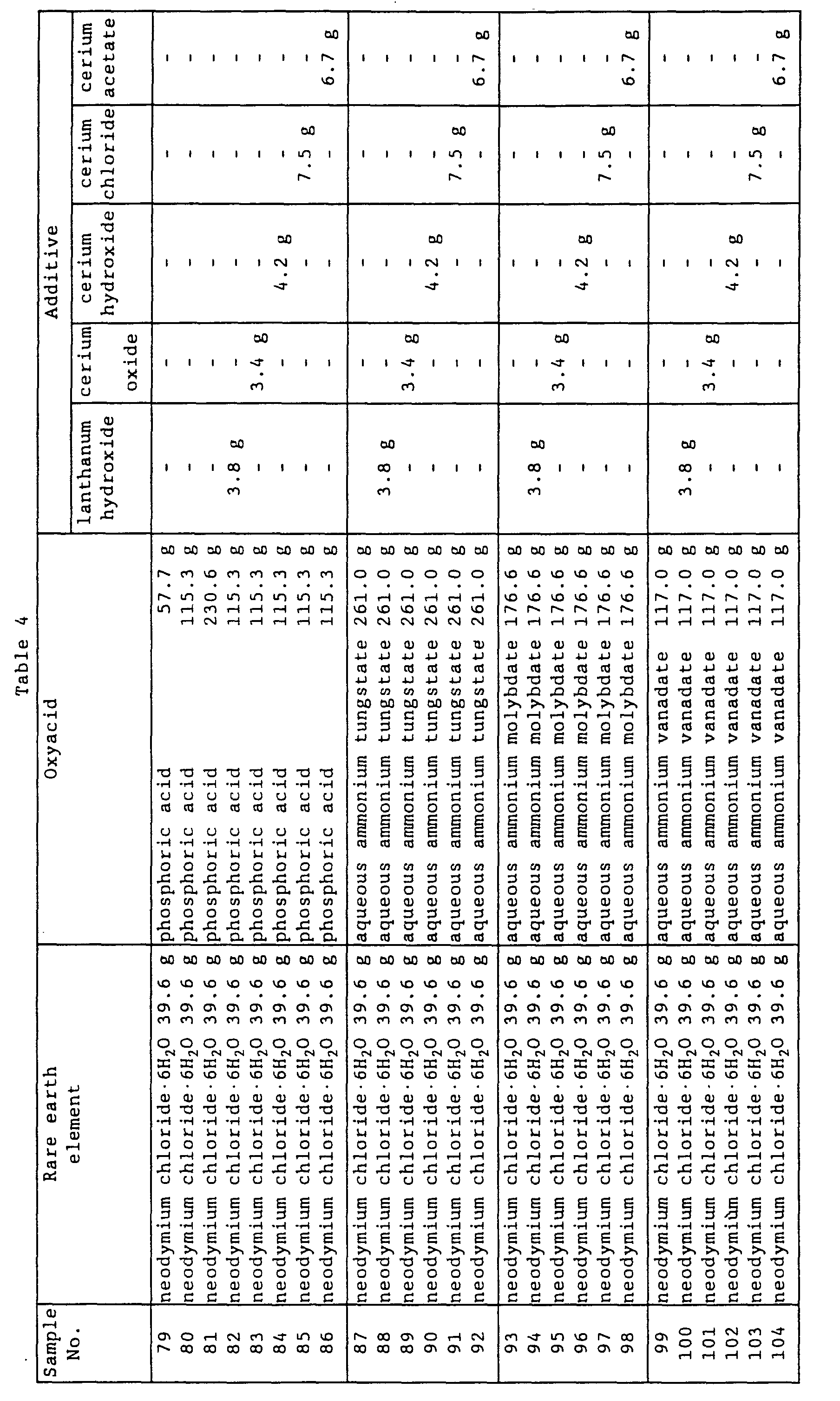

### Example 5

After thoroughly mixing 32.6 g of lanthanum oxide and 115.3 g of phosphoric acid (85%) as shown in Table 13, the mixture was heated at 150°C for 12 hours and 1 g of each organic-based corrosion inhibitor was added to the resulting paste-like products to make treatment solutions (No. 151-165 in Table 13).

Also, adjuvants were added to treatment solution No. 161 to a molar ratio of 1:10 for cerium to lanthanum, and mixed to make treatment solutions (No. 166-173 in Table 14).

In Examples 5 and 6, the α-mercaptolauric acid and N-phenyl-3-formyl-2,5-dimethylpyrrole were synthesized, and all the other components were commercially available reagents.

### Example 6

After thoroughly mixing 23.5 g of cerium phosphate and 115.3 g of phosphoric acid (85%) as shown in Table 15, the mixture was heated at 150°C for 12 hours. One gram of each organic-based inhibitor was added to the resulting paste-like products to make treatment solutions (No. 174-188 in Table 15).

Also, adjuvants were added to treatment solution No. 184 to a molar ratio of 1:10 for the cerium contained therein to the cerium compound, and mixed to make treatment solutions (No.189-195 in Table 16).

### (Film-forming method)

Each treatment solution was applied to a metal sheet to a dry film thickness of 1 µm using a bar coater, and then heat treated at a sheet temperature of 100-200°C for 30 seconds to one hour. The metal sheet used was GI (fused zinc-plated steel sheet, plating coverage: 90 g/m²), EG (zinc-electroplated steel sheet, plating coverage: 20 g/m²) or AL (fused aluminum-silicon alloy-plated steel sheet, plating coverage: 120 g/m², Al/Si = 90/10).

Incidentally, as a chromate-treatment solution for comparison with chromate-treated steel sheets, a treatment bath was prepared containing 30 g/l of partially starch-reduced chromic acid in terms of CrO₃, 40 g/l of SiO₂ and 20 g/l of phosphoric acid, and films were formed by application, drying and hardening onto the steel sheets. (The amount of Cr in the films was 100 mg/m² in terms of Cr metal).

### (Evaluation of film performance)

### (a) Working follow-up property test

After subjecting the sample to 7 mm Erichsen working, it was observed by SEM to evaluate the working follow-up property.

Evaluation scale:
ⓞ: no cracking
o: slight cracking
Δ: slight peeling
x: large cracking, large area peeling

### (b) Flat sheet corrosion resistance test

The corrosion resistance was evaluated based on the rusted area after spraying the sample with 5%, 35°C saline. The spraying period was 10 days for GI and EG and 15 days for AL, and the white rust incidence was measured in all cases. Cold-rolled steel sheets were sprayed with saline for 2 hours and the red rust incidence was measured, while aluminum sheets were dipped for 30 minutes in 100°C boiling water and the black rust incidence was measured.

Evaluation scale:
ⓞ: 0% rust incidence
o: less than 5% rust incidence
Δ: from 5% to less than 20% rust incidence
x: 20% or greater rust incidence

### (c) Worked corrosion resistance test

After 7 mm Erichsen working of the sample, the worked corrosion resistance was evaluated based on the rusted area after spraying with 5%, 35°C saline. The spraying period was 10 days for GI and EG and 15 days for AL, and the white rust incidence was measured for all cases.

Evaluation scale:
ⓞ: 0% rust incidence
o: less than 5% rust incidence
Δ: from 5% to less than 20% rust incidence
x: 20% or greater rust incidence

### Results

The results of evaluation for Examples 1-6 are listed in Tables 5-16.

As shown in these tables, the surface treated metal sheets of the present invention had excellent working follow-up properties and exhibited the same flat sheet and worked part corrosion resistances as chromate-treated sheets. Consequently, they exhibit their effect as corrosion resistant films containing absolutely no hexavalent chromium and exhibiting excellent environmental suitability as conversion treatment films.

**Table 5**

| No. | Metal sheet | Working follow-up property | Flat sheet corrosion resistance | Worked part corrosion resistance |
|---|---|---|---|---|
| 1 | EG | ⓞ | ⓞ | ⓞ |
| | GI | ⓞ | ○ | ○ |
| | AL | ⓞ | ○ | ○ |
| 2 | EG | ⓞ | ○ | ○ |
| | GI | ⓞ | ○ | ○ |
| | AL | ⓞ | ○ | ○ |
| 3 | EG | ○ | ○ | ○ |
| | GI | ○ | ○ | ○ |
| | AL | ○ | ○ | ○ |
| 4 | EG | ⓞ | ⓞ | ⓞ |
| | GI | ⓞ | ○ | ○ |
| | AL | ⓞ | ⓞ | ⓞ |
| 5 | EG | ⓞ | ⓞ | ⓞ |
| | GI | ○ | ○ | ○ |
| | AL | ○ | ○ | ○ |
| 6 | EG | ⓞ | ⓞ | ⓞ |
| | GI | ⓞ | ○ | ○ |
| | AL | ⓞ | ⓞ | ○ |
| 7 | EG | ○ | ○ | ○ |
| | GI | ○ | ○ | ○ |
| | AL | ○ | ○ | ○ |
| 8 | EG | ⓞ | ⓞ | ○ |
| | GI | ○ | ○ | ○ |
| | AL | ⓞ | ○ | ○ |
| 9 | EG | ○ | ○ | ○ |
| | GI | ○ | ○ | ○ |
| | AL | ○ | ○ | ○ |
| 10 | EG | ⓞ | ⓞ | ⓞ |
| | GI | ⓞ | ○ | ○ |
| | AL | ⓞ | ⓞ | ⓞ |
| 11 | EG | ⓞ | ⓞ | ○ |
| | GI | ○ | ○ | ○ |
| | AL | ⓞ | ○ | ○ |
| 12 | EG | ⓞ | ⓞ | ○ |
| | GI | ○ | ○ | ○ |
| | AL | ⓞ | ○ | ○ |
| 13 | EG | ⓞ | ⓞ | ⓞ |
| | GI | ⓞ | ⓞ | ⓞ |
| | AL | ⓞ | ⓞ | ⓞ |
| 14 | EG | ⓞ | ⓞ | ⓞ |
| | GI | ○ | ○ | ○ |
| | AL | ⓞ | ○ | ○ |
| Comp. Ex. | EG | ○ | Δ | Δ |
| | GI | Δ | Δ | x |
| | AL | ○ | Δ | Δ |

**Table 6**

| No. | Metal sheet | Working follow-up property | Flat sheet corrosion resistance | Worked part corrosion resistance |
|---|---|---|---|---|
| 15 | EG | ○ | ○ | ○ |
| | GI | ○ | ○ | ○ |
| | AL | ○ | ○ | ○ |
| 16 | EG | ⓞ | ⓞ | ⓞ |
| | GI | ⓞ | ○ | ○ |
| | AL | ⓞ | ⓞ | ⓞ |
| 17 | EG | ⓞ | ⓞ | ○ |
| | GI | ○ | ○ | ○ |
| | AL | ⓞ | ○ | ○ |
| 18 | EG | ⓞ | ⓞ | ○ |
| | GI | ○ | ○ | ○ |
| | AL | ⓞ | ○ | ○ |
| 19 | EG | ⓞ | ⓞ | ⓞ |
| | GI | ⓞ | ⓞ | ⓞ |
| | AL | ⓞ | ⓞ | ⓞ |
| 20 | EG | ⓞ | ⓞ | ⓞ |
| | GI | ○ | ○ | ○ |
| | AL | ⓞ | ○ | ○ |
| 21 | EG | ○ | ⓞ | ○ |
| | GI | ○ | ○ | ○ |
| | AL | ○ | ○ | ○ |
| 22 | EG | ⓞ | ⓞ | ⓞ |
| | GI | ⓞ | ○ | ○ |
| | AL | ⓞ | ⓞ | ⓞ |
| 23 | EG | ⓞ | ⓞ | ○ |
| | GI | ○ | ○ | ○ |
| | AL | ⓞ | ○ | ○ |
| 24 | EG | ⓞ | ⓞ | ○ |
| | GI | ○ | ○ | ○ |
| | AL | ⓞ | ○ | ○ |
| 25 | EG | ⓞ | ⓞ | ⓞ |
| | GI | ⓞ | ⓞ | ⓞ |
| | AL | ⓞ | ⓞ | ⓞ |
| 26 | EG | ⓞ | ⓞ | ⓞ |
| | GI | ○ | ○ | ○ |
| | AL | ⓞ | ○ | ○ |

**Table 7**

| No. | Metal sheet | Working follow-up property | Flat sheet corrosion resistance | Worked part corrosion resistance |
|---|---|---|---|---|
| 27 | EG | ⓞ | ⓞ | ⓞ |
| | GI | ⓞ | ○ | ○ |
| | AL | ⓞ | ○ | ○ |
| 28 | EG | ⓞ | ○ | ○ |
| | GI | ⓞ | ○ | ○ |
| | AL | ⓞ | ○ | ○ |
| 29 | EG | ○ | ○ | ○ |
| | GI | ○ | ○ | ○ |
| | AL | ○ | ○ | ○ |
| 30 | EG | ⓞ | ⓞ | ⓞ |
| | GI | ⓞ | ○ | ○ |
| | AL | ⓞ | ⓞ | ⓞ |
| 31 | EG | ⓞ | ⓞ | ⓞ |
| | GI | ○ | ○ | ⓞ |
| | AL | ○ | ○ | ○ |
| 32 | EG | ⓞ | ⓞ | ⓞ |
| | GI | ⓞ | ○ | ○ |
| | AL | ⓞ | ⓞ | ○ |
| 33 | EG | ○ | ○ | ○ |
| | GI | ○ | ○ | ○ |
| | AL | ○ | ○ | ○ |
| 34 | EG | ⓞ | ⓞ | ○ |
| | GI | ○ | ○ | ○ |
| | AL | ⓞ | ○ | ○ |
| 35 | EG | ○ | ○ | ○ |
| | GI | ○ | ○ | ○ |
| | AL | ○ | ○ | ○ |
| 36 | EG | ⓞ | ⓞ | ⓞ |
| | GI | ⓞ | ○ | ○ |
| | AL | ⓞ | ⓞ | ⓞ |
| 37 | EG | ⓞ | ⓞ | ○ |
| | GI | ○ | ○ | ○ |
| | AL | ⓞ | ○ | ○ |
| 38 | EG | ⓞ | ⓞ | ○ |
| | GI | ○ | ○ | ○ |
| | AL | ⓞ | ○ | ○ |
| 39 | EG | ⓞ | ⓞ | ⓞ |
| | GI | ⓞ | ⓞ | ⓞ |
| | AL | ⓞ | ⓞ | ⓞ |
| 40 | EG | ⓞ | ⓞ | ○ |
| | GI | ○ | ○ | ○ |
| | AL | ⓞ | ○ | ○ |

**Table 8**

| No. | Metal sheet | Working follow-up property | Flat sheet corrosion resistance | Worked part corrosion resistance |
|---|---|---|---|---|
| 41 | EG | ○ | ○ | ○ |
| | GI | ○ | ○ | ○ |
| | AL | ○ | ○ | ○ |
| 42 | EG | ⓞ | ⓞ | ⓞ |
| | GI | ⓞ | ○ | ○ |
| | AL | ⓞ | ⓞ | ⓞ |
| 43 | EG | ⓞ | ⓞ | ○ |
| | GI | ○ | ○ | ○ |
| | AL | ⓞ | ○ | ○ |
| 44 | EG | ⓞ | ⓞ | ⓞ |
| | GI | ○ | ○ | ○ |
| | AL | ⓞ | ○ | ○ |
| 45 | EG | ⓞ | ⓞ | ⓞ |
| | GI | ⓞ | ⓞ | ⓞ |
| | AL | ⓞ | ⓞ | ⓞ |
| 46 | EG | ⓞ | ⓞ | ⓞ |
| | GI | ○ | ○ | ○ |
| | AL | ⓞ | ○ | ○ |
| 47 | EG | ○ | ⓞ | ○ |
| | GI | ○ | ○ | ○ |
| | AL | ○ | ○ | ○ |
| 48 | EG | ⓞ | ⓞ | ⓞ |
| | GI | ⓞ | ○ | ○ |
| | AL | ⓞ | ⓞ | ⓞ |
| 49 | EG | ⓞ | ⓞ | ○ |
| | GI | ○ | ○ | ○ |
| | AL | ⓞ | ○ | ○ |
| 50 | EG | ⓞ | ⓞ | ○ |
| | GI | ○ | ○ | ○ |
| | AL | ⓞ | ○ | ○ |
| 51 | EG | ⓞ | ⓞ | ⓞ |
| | GI | ⓞ | ⓞ | ⓞ |
| | AL | ⓞ | ⓞ | ⓞ |
| 52 | EG | ⓞ | ⓞ | ⓞ |
| | GI | ○ | ○ | ○ |
| | AL | ⓞ | ○ | ○ |

**Table 9**

| No. | Metal sheet | Working follow-up property | Flat sheet corrosion resistance | Worked part corrosion resistance |
|---|---|---|---|---|
| 53 | EG | ⓞ | ⓞ | ⓞ |
| | GI | ⓞ | ○ | ○ |
| | AL | ⓞ | ○ | ○ |
| 54 | EG | ⓞ | ○ | ○ |
| | GI | ⓞ | ○ | ○ |
| | AL | ⓞ | ○ | ○ |
| 55 | EG | ○ | ○ | ○ |
| | GI | ○ | ○ | ○ |
| | AL | ○ | ○ | ○ |
| 56 | EG | ⓞ | ⓞ | ⓞ |
| | GI | ⓞ | ○ | ○ |
| | AL | ⓞ | ⓞ | ⓞ |
| 57 | EG | ⓞ | ⓞ | ⓞ |
| | GI | ○ | ○ | ○ |
| | AL | ○ | ○ | ○ |
| 58 | EG | ⓞ | ⓞ | ⓞ |
| | GI | ⓞ | ○ | ○ |
| | AL | ⓞ | ⓞ | ○ |
| 59 | EG | ○ | ○ | ○ |
| | GI | ○ | ○ | ○ |
| | AL | ○ | ○ | ○ |
| 60 | EG | ⓞ | ⓞ | ○ |
| | GI | ○ | ○ | ○ |
| | AL | ⓞ | ○ | ○ |
| 61 | EG | ○ | ○ | ○ |
| | GI | ○ | ○ | ○ |
| | AL | ○ | ○ | ○ |
| 62 | EG | ⓞ | ⓞ | ⓞ |
| | GI | ⓞ | ○ | ○ |
| | AL | ⓞ | ⓞ | ⓞ |
| 63 | EG | ⓞ | ⓞ | ○ |
| | GI | ○ | ○ | ○ |
| | AL | ⓞ | ○ | ○ |
| 64 | EG | ⓞ | ⓞ | ○ |
| | GI | ○ | ○ | ○ |
| | AL | ⓞ | ○ | ○ |
| 65 | EG | ⓞ | ⓞ | ⓞ |
| | GI | ⓞ | ⓞ | ⓞ |
| | AL | ⓞ | ⓞ | ⓞ |
| 66 | EG | ⓞ | ⓞ | ⓞ |
| | GI | ○ | ○ | ○ |
| | AL | ⓞ | ○ | ○ |

**Table 10**

| No. | Metal sheet | Working follow-up property | Flat sheet corrosion resistance | Worked part corrosion resistance |
|---|---|---|---|---|
| 67 | EG | ○ | ○ | ○ |
| | GI | ○ | ○ | ○ |
| | AL | ○ | ○ | ○ |
| 68 | EG | ⓞ | ⓞ | ⓞ |
| | GI | ⓞ | ○ | ○ |
| | AL | ⓞ | ⓞ | ⓞ |
| 69 | EG | ⓞ | ⓞ | ○ |
| | GI | ○ | ○ | ○ |
| | AL | ⓞ | ○ | ○ |
| 70 | EG | ⓞ | ⓞ | ○ |
| | GI | ○ | ○ | ○ |
| | AL | ⓞ | ○ | ○ |
| 71 | EG | ⓞ | ⓞ | ⓞ |
| | GI | ⓞ | ⓞ | ⓞ |
| | AL | ⓞ | ⓞ | ⓞ |
| 72 | EG | ⓞ | ⓞ | ⓞ |
| | GI | ○ | ○ | ○ |
| | AL | ⓞ | ○ | ○ |
| 73 | EG | ○ | ⓞ | ○ |
| | GI | ○ | ○ | ○ |
| | AL | ○ | ○ | ○ |
| 74 | EG | ⓞ | ⓞ | ⓞ |
| | GI | ⓞ | ○ | ○ |
| | AL | ⓞ | ⓞ | ⓞ |
| 75 | EG | ⓞ | ⓞ | ○ |
| | GI | ○ | ○ | ○ |
| | AL | ⓞ | ○ | ○ |
| 76 | EG | ⓞ | ⓞ | ⓞ |
| | GI | ○ | ○ | ○ |
| | AL | ⓞ | ○ | ○ |
| 77 | EG | ⓞ | ⓞ | ⓞ |
| | GI | ⓞ | ⓞ | ⓞ |
| | AL | ⓞ | ⓞ | ⓞ |
| 78 | EG | ⓞ | ⓞ | ⓞ |
| | GI | ○ | ○ | ○ |
| | AL | ⓞ | ○ | ○ |

**Table 11**

| No. | Metal sheet | Working follow-up property | Flat sheet corrosion resistance | Worked part corrosion resistance |
|---|---|---|---|---|
| 79 | EG | ⓞ | ⓞ | ⓞ |
| | GI | ⓞ | ○ | ○ |
| | AL | ⓞ | ○ | ○ |
| 80 | EG | ⓞ | ○ | ○ |
| | GI | ⓞ | ○ | ○ |
| | AL | ⓞ | ○ | ○ |
| 81 | EG | ○ | ○ | ○ |
| | GI | ○ | ○ | ○ |
| | AL | ○ | ○ | ○ |
| 82 | EG | ⓞ | ⓞ | ⓞ |
| | GI | ⓞ | ○ | ○ |
| | AL | ⓞ | ⓞ | ⓞ |
| 83 | EG | ⓞ | ⓞ | ⓞ |
| | GI | ○ | ○ | ○ |
| | AL | ○ | ○ | ○ |
| 84 | EG | ⓞ | ⓞ | ⓞ |
| | GI | ⓞ | ○ | ○ |
| | AL | ⓞ | ⓞ | ○ |
| 85 | EG | ○ | ○ | ○ |
| | GI | ○ | ○ | ○ |
| | AL | ○ | ○ | ○ |
| 86 | EG | ⓞ | ⓞ | ○ |
| | GI | ○ | ○ | ○ |
| | AL | ⓞ | ○ | ○ |
| 87 | EG | ○ | ○ | ○ |
| | GI | ○ | ○ | ○ |
| | AL | ○ | ○ | ○ |
| 88 | EG | ⓞ | ⓞ | ⓞ |
| | GI | ⓞ | ○ | ○ |
| | AL | ⓞ | ⓞ | ⓞ |
| 89 | EG | ⓞ | ⓞ | ○ |
| | GI | ○ | ○ | ○ |
| | AL | ⓞ | ○ | ○ |
| 90 | EG | ⓞ | ⓞ | ○ |
| | GI | ○ | ○ | ○ |
| | AL | ⓞ | ○ | ○ |
| 91 | EG | ⓞ | ⓞ | ⓞ |
| | GI | ⓞ | ⓞ | ⓞ |
| | AL | ⓞ | ⓞ | ⓞ |
| 92 | EG | ⓞ | ⓞ | ⓞ |
| | GI | ○ | ○ | ○ |
| | AL | ⓞ | ○ | ○ |

**Table 12**

| No. | Metal sheet | Working follow-up property | Flat sheet corrosion resistance | Worked part corrosion resistance |
|---|---|---|---|---|
| 93 | EG | ○ | ○ | ○ |
| | GI | ○ | ○ | ○ |
| | AL | ○ | ○ | ○ |
| 94 | EG | ⓞ | ⓞ | ⓞ |
| | GI | ⓞ | ○ | ○ |
| | AL | ⓞ | ⓞ | ⓞ |
| 95 | EG | ⓞ | ⓞ | ○ |
| | GI | ○ | ○ | ○ |
| | AL | ⓞ | ○ | ○ |
| 96 | EG | ⓞ | ⓞ | ○ |
| | GI | ○ | ○ | ○ |
| | AL | ⓞ | ○ | ○ |
| 97 | EG | ⓞ | ⓞ | ⓞ |
| | GI | ⓞ | ⓞ | ⓞ |
| | AL | ⓞ | ⓞ | ⓞ |
| 98 | EG | ⓞ | ⓞ | ⓞ |
| | GI | ○ | ○ | ○ |
| | AL | ⓞ | ○ | ○ |
| 99 | EG | ○ | ⓞ | ○ |
| | GI | ○ | ○ | ○ |
| | AL | ○ | ○ | ○ |
| 100 | EG | ⓞ | ⓞ | ⓞ |
| | GI | ⓞ | ○ | ○ |
| | AL | ⓞ | ⓞ | ⓞ |
| 101 | EG | ⓞ | ⓞ | ○ |
| | GI | ○ | ○ | ○ |
| | AL | ⓞ | ○ | ○ |
| 102 | EG | ⓞ | ⓞ | ○ |
| | GI | ○ | ○ | ○ |
| | AL | ⓞ | ○ | ○ |
| 103 | EG | ⓞ | ⓞ | ⓞ |
| | GI | ⓞ | ⓞ | ⓞ |
| | AL | ⓞ | ⓞ | ⓞ |
| 104 | EG | ⓞ | ⓞ | ⓞ |
| | GI | ○ | ○ | ○ |
| | AL | ⓞ | ○ | ○ |

**Table 13**

| No. | Lanthanum oxide (g) | 85% phosphoric acid (g) | Organic-based corrosion inhibitor | Metal sheet | Performance evaluation | | |
|---|---|---|---|---|---|---|---|
| | | | | | Working follow-up property | Flat sheet corrosion resistance | Worked part corrosion resistance |
| 151 | 32.6 | 115.3 | butyl thioglycolate 1.0 g | EG | ○ | ⓞ | ○ |
| | | | | GI | ○ | ○ | ○ |
| | | | | AL | ○ | ○ | ○ |
| 152 | 32.6 | 115.3 | octyl thioglycolate 1.0 g | EG | ⓞ | ⓞ | ⓞ |
| | | | | GI | ⓞ | ○ | ○ |
| | | | | AL | ⓞ | ○ | ○ |
| 153 | 32.6 | 115.3 | stearyl thioglycolate 1.0 g | EG | ⓞ | ⓞ | ⓞ |
| | | | | GI | ⓞ | ○ | ○ |
| | | | | AL | ⓞ | ○ | ○ |
| 154 | 32.6 | 115.3 | α-mercaptocaproic -acid 1.0 g | EG | ⓞ | ⓞ | ○ |
| | | | | GI | ⓞ | ○ | ○ |
| | | | | AL | ⓞ | ○ | ○ |
| 155 | 32.6 | 115.3 | 8-mercapto-quinoline 1.0 g | EG | ⓞ | ⓞ | ○ |
| | | | | GI | ○ | ○ | ○ |
| | | | | AL | ○ | ○ | ○ |
| 156 | 32.6 | 115.3 | 8-hydroxy quinoline 1.0 g | EG | ⓞ | ⓞ | ⓞ |
| | | | | GI | ⓞ | ⓞ | ○ |
| | | | | AL | ⓞ | ⓞ | ⓞ |
| 157 | 32.6 | 115.3 | 6-(N,N'-dibutylam ino-1,3,5-triazine-2,4-dithiol 1.0 g g | EG | ○ | ○ | ○ |
| | | | | GI | ○ | ○ | ○ |
| | | | | AL | ○ | ○ | ○ |
| 158 | 32.6 | 115.3 | lauryl gallate 1.0 g | EG | ⓞ | ⓞ | ⓞ |
| | | | | GI | ○ | ○ | ○ |
| | | | | AL | ⓞ | ⓞ | ○ |
| 159 | 32.6 | 115.3 | 1 wtz aqueous polyanili ne solution (dopant: barium sulfate) 1.0 g | EG | ○ | ○ | ○ |
| | | | | GI | ○ | ○ | ○ |
| | | | | AL | ○ | ○ | ○ |
| 160 | 32.6 | 115.3 | N-phenyl-3-formyl-2,5-dimethylpyrrole 1.0 g | EG | ⓞ | ⓞ | ⓞ |
| | | | | GI | ⓞ | ⓞ | ⓞ |
| | | | | AL | ⓞ | ⓞ | ⓞ |
| 161 | 32.6 | 115.3 | α-mercaptolauric acid 1.0 g | EG | ⓞ | ⓞ | ⓞ |
| | | | | GI | ○ | ○ | ○ |
| | | | | AL | ⓞ | ○ | ○ |
| 162 | 32.6 | 115.3 | α-mercaptolauric acid 0.1 g | EG | ⓞ | ○ | ○ |
| | | | | GI | ○ | ○ | ○ |
| | | | | AL | ⓞ | ○ | ○ |
| 163 | 32.6 | 115.3 | α-mercaptolauric acid 10.0 g | EG | ⓞ | ⓞ | ⓞ |
| | | | | GI | ⓞ | ○ | ○ |
| | | | | AL | ⓞ | ⓞ | ○ |
| 164 | 32.6 | 115.3 | nicotinic acid 1.0 g | EG | ⓞ | ⓞ | ⓞ |
| | | | | GI | ⓞ | ⓞ | ⓞ |
| | | | | AL | ⓞ | ⓞ | ⓞ |
| 165 | 32.6 | 115.3 | catechol 1.0 g | EG | ⓞ | ⓞ | ⓞ |
| | | | | GI | ⓞ | ⓞ | ⓞ |
| | | | | AL | ⓞ | ⓞ | ⓞ |

**Table 14**

| No. | Lanthanum oxide (g) | 85% phosphoric acid (g) | α-mercaptolauric acid (g) | Added aid | Metal sheet | Performance evaluation | | |
|---|---|---|---|---|---|---|---|---|
| | | | | | | Working follow-up property | Flat sheet corrosion resistance | Worked part corrosion resistance |
| 166 | 32.6 | 115.3 | 1.0 | cerium oxide 3.4 g | EG | ⓞ | ⓞ | ⓞ |
| | | | | | GI | ○ | ○ | ○ |
| | | | | | AL | ⓞ | ⓞ | ⓞ |
| 167 | 32.6 | 115.3 | 1.0 | cerium hydroxide 4.2 g | EG | ○ | ○ | ○ |
| | | | | | GI | ○ | ○ | ○ |
| | | | | | AL | ○ | ○ | ○ |
| 168 | 32.6 | 115.3 | 1.0 | cerium chloride ·7H₂O 7.5 g | EG | ⓞ | ⓞ | ⓞ |
| | | | | | GI | ○ | ⓞ | ⓞ |
| | | | | | AL | ⓞ | ⓞ | ⓞ |
| 169 | 32.6 | 115.3 | 1.0 | cerium chloride ·8H₂O 6.0 g | EG | ⓞ | ⓞ | ⓞ |
| | | | | | GI | ○ | ⓞ | ⓞ |
| | | | | | AL | ○ | ○ | ○ |
| 170 | 32.6 | 115.3 | 1.0 | cerium sulfate ·6H₂O 14.3 g | EG | ⓞ | ⓞ | ⓞ |
| | | | | | GI | ○ | ⓞ | ⓞ |
| | | | | | AL | ○ | ○ | ○ |
| 171 | 32.6 | 115.3 | 1.0 | cerium nitrate ·6H₂O 8.7 g | EG | ⓞ | ⓞ | ⓞ |
| | | | | | GI | ○ | ○ | ○ |
| | | | | | AL | ○ | ○ | ○ |
| 172 | 32.6 | 115.3 | 1.0 | cerium acetate ·H₂O 6.7 g | EG | ⓞ | ⓞ | ⓞ |
| | | | | | GI | ○ | ○ | ○ |
| | | | | | AL | ○ | ○ | ○ |
| 173 | 32.6 | 115.3 | 1.0 | cerium phosphate 4.7 g | EG | ⓞ | ⓞ | ⓞ |
| | | | | | GI | ○ | ○ | ○ |
| | | | | | AL | ○ | ○ | ○ |
| Comp. Ex. | Application chromate film | | | | EG | ○ | Δ | Δ |
| | | | | | GI | Δ | Δ | Δ |
| | | | | | AL | ○ | Δ | Δ |

**Table 15**

| No. | Film composition | | | Metal sheet | Performance evaluation | | |
|---|---|---|---|---|---|---|---|
| | cerium phosphate (g) | 85% phosphoric acid (g) | Organic-based corrosion inhibitor | | Working follow-up property | Flat sheet corrosion resistance | Worked part corrosion resistance |
| 174 | 23.5 | 115.3 | butyl thioglycolate 1.0 g | EG | ⓞ | ⓞ | ⓞ |
| | | | | GI | ⓞ | ○ | ○ |
| | | | | AL | ⓞ | ○ | ○ |
| 175 | 23.5 | 115.3 | octyl thioglycolate 1.0 g | EG | ⓞ | ⓞ | ⓞ |
| | | | | GI | ⓞ | ○ | ○ |
| | | | | AL | ⓞ | ○ | ○ |
| 176 | 23.5 | 115.3 | stearyl | EG | ○ | ○ | ○ |
| | | | thioglyco 1-ate | GI | ○ | ○ | ○ |
| | | | 1.0 g | AL | ○ | ○ | ○ |
| 177 | 23.5 | 115.3 | α-mercaptocaproic acid 1.0 g | EG | ⓞ | ⓞ | ⓞ |
| | | | | GI | ⓞ | ○ | ○ |
| | | | | AL | ⓞ | ○ | ○ |
| 178 | 23.5 | 115.3 | 8-mercaptoquinoline 1.0 g | EG | ⓞ | ⓞ | ⓞ |
| | | | | GI | ○ | ○ | ○ |
| | | | | AL | ○ | ○ | ○ |
| 179 | 23.5 | 115.3 | 8-hydroxy quinoline 1.0 g | EG | ⓞ | ⓞ | ⓞ |
| | | | | GI | ⓞ | ○ | ○ |
| | | | | AL | ⓞ | ⓞ | ○ |
| 180 | 23.5 | 115.3 | 6-(N,N'-dibutylam ino-1,3,5-triazine-2,4-dithiol 1.0 g | EG | ○ | ○ | ○ |
| | | | | GI | ○ | ○ | ○ |
| | | | | AL | ○ | ○ | ○ |
| 181 | 23.5 | 115.3 | lauryl gallate 1.0 g | EG | ⓞ | ⓞ | ○ |
| | | | | GI | ○ | ○ | ○ |
| | | | | AL | ⓞ | ○ | ○ |
| 182 | 23.5 | 115.3 | 1 wtZ aqueous polyaniline solution (dopant: barium sulfate) 1.0 g | EG | ○ | ○ | ○ |
| | | | | GI | ○ | ○ | ○ |
| | | | | AL | ○ | ○ | ○ |
| 183 | 23.5 | 115.3 | N-phenyl-3-formyl-2,5-dimethyl-pyrrole 1.0 g | EG | ⓞ | ⓞ | ○ |
| | | | | GI | ○ | ○ | ○ |
| | | | | AL ⓞ | | ○ | ○ |
| 184 | 23.5 | 115.3 | α-mercaptolauric acid 1.0 g | EG | ⓞ | ⓞ | ○ |
| | | | | GI | ○ | ○ | ○ |
| | | | | AL | ⓞ | ○ | ○ |
| 185 | 23.5 | 115.3 | α-mercaptolauric acid 0.1 g | EG | ⓞ | ⓞ | ⓞ |
| | | | | GI | ⓞ | ⓞ | ⓞ |
| | | | | AL | ⓞ | ⓞ | ⓞ |
| 186 | 23.5 | 115.3 | α-mercaptolauric acid 10.0 g | EG | ⓞ | ⓞ | ⓞ |
| | | | | GI | ○ | ○ | ○ |
| | | | | AL | ⓞ | ○ | ○ |
| 187 | 23.5 | 115.3 | nicotinic acid 1.0 g | EG | ⓞ | ⓞ | ⓞ |
| | | | | GI | ⓞ | ⓞ | ⓞ |
| | | | | AL | ⓞ | ⓞ | ⓞ |
| 188 | 23.5 | 115.3 | catechol 1·0 g | EG | ⓞ | ⓞ | ⓞ |
| | | | | GI | ⓞ | ⓞ | ⓞ |
| | | | | AL | ⓞ | ⓞ | ⓞ |

**Table 16**

| No. | | Film composition | | | Metal sheet | Performance evaluation | | |
|---|---|---|---|---|---|---|---|---|
| | Cerium phosphate (g) | 85% phosphoric acid (g) | α-mercaptolauric acid (g) | Added aid | | Working follow-up property | Flat sheet corrosion resistance | Worked part corrosion resistance |
| 189 | 23.5 | 115.3 | 1.0 | cerium oxide 3.4 g | EG | ⓞ | ⓞ | ⓞ |
| | | | | | GI | ○ | ○ | ○ |
| | | | | | AL | ⓞ | ○ | ○ |
| 190 | 23.5 | 115.3 | 1.0 | cerium hydroxide 4.2 g | EG | ⓞ | ⓞ | ⓞ |
| | | | | | GI | ○ | ○ | ○ |
| | | | | | AL | ⓞ | ○ | ○ |
| 191 | 23.5 | 115.3 | 1.0 | cerium chloride ·7H₂O 7.5 g | EG | ⓞ | ⓞ | ⓞ |
| | | | | | GI | ○ | ⓞ | ○ |
| | | | | | AL | ⓞ | ○ | ⓞ |
| 192 | 23.5 | 115.3 | 1.0 | cerium chloride ·8H₂O 6.0 g | EG | ⓞ | ⓞ | ⓞ |
| | | | | | GI | ○ | ○ | ○ |
| | | | | | AL | ⓞ | ○ | ⓞ |
| 193 | 23.5 | 115.3 | 1.0 | cerium sulfate ·6H₂O 14.3 g | EG | ⓞ | ⓞ | ⓞ |
| | | | | | GI | ○ | ○ | ○ |
| | | | | | AL | ⓞ | ○ | ⓞ |
| 194 | 23.5 | 115.3 | 1.0 | cerium nitrate ·6H₂O 8.7 g | EG | ⓞ | ⓞ | ⓞ |
| | | | | | GI | ○ | ⓞ | ○ |
| | | | | | AL | ⓞ | ○ | ⓞ |
| 195 | 23.5 | 115.3 | 1.0 | cerium acetate ·H₂O 6.7 g | EG | ⓞ | ⓞ | ⓞ |
| | | | | | GI | ○ | ○ | ○ |
| | | | | | AL | ⓞ | ○ | ⓞ |
| Comp. Ex. | Application chromate film | | | | EG | ○ | Δ | Δ |
| | | | | | GI | Δ | Δ | x |
| | | | | | AL | ○ | Δ | Δ |

### Example 7

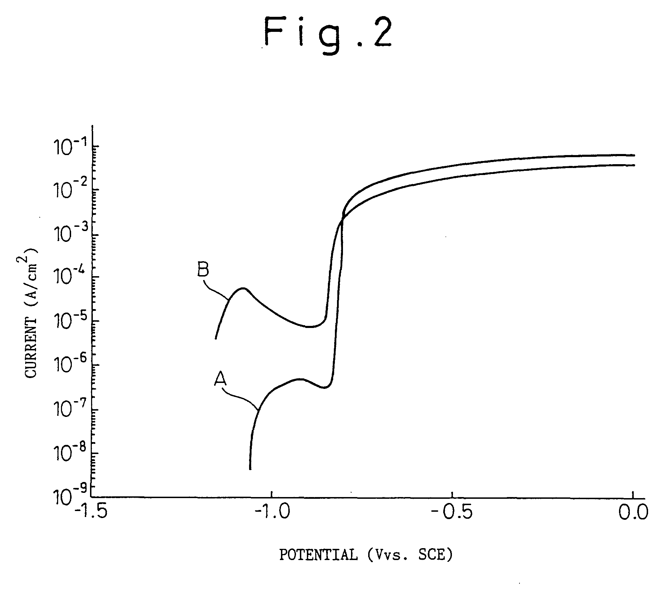

The basic effect of the surface treatment agent of the invention will now be illustrated concretely with simplified examples. A surface treatment agent containing as a lanthanum compound lanthanum phosphate obtained by reaction between lanthanum oxide and ortho-phosphoric acid, with 5 moles of ortho-phosphoric acid in terms of H₃PO₄ as the molar ratio with respect to the lanthanum, and with a lanthanum concentration of 0.64 mol/kg, with water as the diluting agent, was used to coat high purity zinc to obtain a coating layer with a thickness of about 5 µm. Fig. 2 shows an anode current-current curve for coated zinc and zinc with no coating layer in a 0.1 mol/liter NaCl solution adjusted to pH 8.4 with boric acid and sodium borate. The anode current for the zinc with the coating layer was notably smaller compared to the zinc with no coating layer, thus confirming an effect of suppressing anode elution of zinc in the coating layer and of inhibiting diffusion of chloride ion, a corrosion-accelerating substance, into the zinc surface.

### Example 8

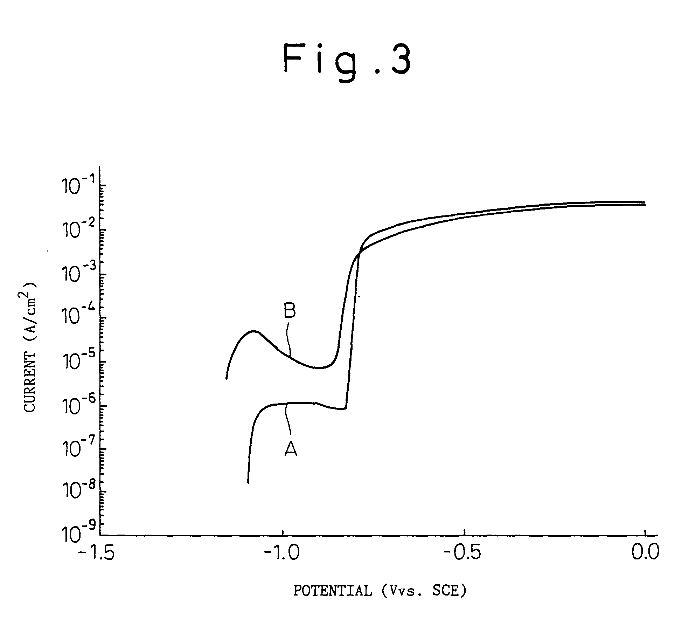

Fig. 3 shows an anode current-current curve obtained by exactly the same treatment as in Example 7, except that trivalent cerium oxide was used instead of lanthanum oxide as the lanthanum compound. The same results were obtained as in Example 7.

### [Examples 9-10]

### (Preparation of surface treatment agents)

### Example 9

Surface treatment agents composed mainly of phosphoric acid and lanthanum phosphate, hydrogen phosphate, oxide, hydroxide or a mixture thereof.

A starting material lanthanum compound such as lanthanum oxide (a), lanthanum hydroxide (b), lanthanum chloride (c), etc. was reacted with ortho-phosphoric acid (d) or poly-phosphoric acid (e) to obtain the lanthanum compound for the surface treatment agent. Also, a phosphoric acid such as ortho-phosphoric acid, poly-phosphoric acid or meta-phosphoric acid (f) or a mixture thereof, and/or a phosphate salt such as ammonium phosphate (g) were further added to adjust the molar ratio of H₃PO₄ to lanthanum to the prescribed value. Water or a mixture of water and methanol (h) was added as a diluting agent to the resulting composition of the lanthanum compound and phosphoric acid, to obtain a surface treatment agent with the prescribed lanthanum concentration. Table 17 lists the surface treatment agents of samples No.201-217 in the order of their phosphoric acid to lanthanum molar ratios, and the method of preparation is indicated as (a) to (h). For samples No.201 and No.210 only, a mixture of water and methanol was used as the diluting agent, in a weight proportion of 2:1 for both cases.

When a cerium compound and/or an organic-based corrosion inhibitor are added, they are added during addition of the phosphate after adjustment of the lanthanum compound, or simultaneously with the diluting agent. Of samples No 218-224 listed in Table 18, samples No. 218-221 were specified as treatment agents with the same lanthanum compound and phosphoric acid composition as sample No.7, i.e. treatment agents with a lanthanum compound concentration of 0.3 mol/kg and ortho-phosphoric acid in a molar ratio of 5 with respect to lanthanum, and a cerium compound and/or an organic-based corrosion inhibitor were added. Also, samples No. 222-224 were specified as treatment agents with the same lanthanum compound and phosphoric acid composition as sample No.210, i.e. treatment agents with a lanthanum compound concentration of 0.5 mol/kg and poly-phosphoric acid in a molar ratio of 10 in terms of H₃PO₄ with respect to lanthanum, and cerium nitrate as a cerium compound and/or an organic inhibitor were added.

### Example 10

Surface treatment agents composed mainly of phosphoric acid and cerium phosphate, hydrogen phosphate, oxide, hydroxide or a mixture thereof.

The starting material cerium compounds such as trivalent cerium oxide Ce₂O₃ (i), tetravalent cerium oxide CeO₂ (j), trivalent cerium hydroxide (k), trivalent cerium chloride (l) and cerium sulfate (m) were reacted with ortho-phosphoric acid (n) or poly-phosphoric acid (o) to obtain cerium compounds for the surface treatment agents. Also, a phosphoric acid such as ortho-phosphoric acid, poly-phosphoric acid or meta-phosphoric acid (p) or a mixture thereof, and/or a phosphate salt such as ammonium phosphate (g) were further added to adjust the molar ratio of H₃PO₄ to cerium to the prescribed value. Water or a mixture of water and methanol (r) was added as a diluting agent to the resulting composition of the cerium compound and phosphoric acid, to obtain a surface treatment agent with the prescribed cerium concentration. Table 19 lists the surface treatment agents of samples No. 225-241 in the order of their phosphoric acid to cerium molar ratios, and the method of preparation is indicated as (i) to (r). For samples No.225 and No.234 only, a mixture of water and methanol was used as the diluting agent, in a weight proportion of 2:1 for both cases.

When a lanthanum compound and/or an organic-based corrosion inhibitor are added, they are added during addition of the phosphate after adjustment of the cerium compound, or simultaneously with the diluting agent. Of samples No. 242-248 listed in Table 20 samples No. 242-245 were specified as treatment agents with the same cerium compound and phosphoric acid composition as sample No.231, i.e. treatment agents with a cerium compound concentration of 0.3 mol/kg and ortho-phosphoric acid in a molar ratio of 5 with respect to cerium, and a lanthanum compound and/or an organic-based corrosion inhibitor were added. Also, samples No.246-248 were specified as treatment agents with the same cerium compound and phosphoric acid composition as sample No.234, i.e. treatment agents with a cerium compound concentration of 0.5 mol/kg and poly-phosphoric acid in a molar ratio of 10 in terms of H₃PO₄ with respect to cerium, and lanthanum chloride as a lanthanum compound and/or an organic-based corrosion inhibitor were added.

The organic inhibitors used in Table 2 are indicated by the following abbreviations.
PFDP: N-phenyl-3-formyl-2,5-dimethylpyrrole
TGO: octyl thioglycolate
MLA: α-mercaptolauric acid
MBA: o-mercaptobenzoic acid
MNA: o-mercaptonicotinic acid
HOQ: 8-hydroxyquinoline

### (Film-forming method)

The film-forming method for the treatment agents with a low degree of dilution, and hence a high viscosity, was application with a bar coater to a dry coating layer thickness of 1 µm. For the treatment agents with a high degree of dilution and hence a low viscosity, spreading was accomplished by spraying to a dry coating layer thickness of 0.2 µm. After the coating or spreading, the metal material was heat treated at 100-200°C for 30 seconds to one hour. Formation of the coating layer by dipping was accomplished by holding the metal material in the treatment bath at 85°C for 30 seconds, and drying in air. The metal sheet used was GI (fused zinc-plated steel sheet, plating coverage: 90 g/m²), EG (zinc-electroplated steel sheet, plating coverage: 20 g/m²) or AL (fused aluminum-silicon alloy-plated steel sheet, plating coverage: 120 g/m², Al/Si = 90/10) plated steel sheets, cold-rolled steel sheets and aluminum sheets.

In Comparative Example 201, for comparison with zinc phosphate surface treatment agents containing lanthanum compounds, GI and EG were used as the metal materials and dipped for 2 minutes at 40°C in a treatment solution comprising 0.01 mol/kg of lanthanum nitrate in terms of lanthanum, and ortho-phosphoric acid at a molar ratio of 15 in terms of H₃PO₄ to lanthanum, and water washing was followed by drying at 100°C for 10 minutes to form films.

In Comparative Example 203, for comparison with a cathode-deposited cerium compound, EG was used as the metal material and a cathode current was passed through at a current density of 100 mA/cm² in a 0.1 mol/liter trivalent cerium chloride solution to deposit trivalent cerium hydroxide on the surface, after which reaction with ortho-phosphoric acid gave a mixed film of cerium phosphate and hydroxide compounds.

In Comparative Example 202, for comparison with chromate treatment, a treatment bath was prepared containing 30 g/l of chromic acid partially reduced with starch in terms of CrO₃, 40 g/l of SiO₂ and 20 g/l of phosphoric acid, and films were formed by application, drying and hardening onto steel sheets. (The amount of Cr in the films was 120 mg/m² in terms of Cr metal).

In Comparative Example 203, for comparison with a cathode-deposited cerium compound, EG was used as the metal material and a cathode current was passed through at a current density of 100 mA/cm² in a 0.1 mol/liter trivalent cerium chloride solution to deposit trivalent cerium hydroxide on the surface, after which reaction with ortho-phosphoric acid gave a mixed film of cerium phosphate and hydroxide compounds.

Incidentally, for the metal materials and film-forming methods listed in Tables 17-20, the plated steel sheets used as metal materials are indicated by type as GI, EG or AL, and the coating methods for forming the films are indicated by (P), (S) or (D) for painting, spraying or dipping, respectively.

### (Evaluation of coating layer performance)

The method of performance evaluation was the same as for Examples 1-6.

The relationship between the surface treatment agent compositions and their evaluation results is shown in Tables 17-20. As clearly seen in Tables 17 and 19, the metal material surface treatment agents of the invention composed mainly of lanthanum compounds or cerium compounds and phosphoric acid provide coating layers with excellent working follow-up properties and corrosion resistance, and with rust prevention with the films alone which has not been achieved with conventional zinc phosphate treatment, while also providing coating layers with flat and worked part corrosion resistance equivalent to that achieved with chromate treatment. They therefore provide a means of forming films as conversion treatment films containing absolutely no hexavalent chromium, and exhibiting excellent environmental suitability with their effect as anti-corrosion films. In addition, as clearly seen in Tables 18 and 20, the lanthanum compounds or cerium compounds and the organic-based corrosion inhibitors have the effect of complementing the corrosion resistance, especially the worked part corrosion resistance, of coating layers formed from surface treatment agents composed mainly of cerium compounds or lanthanum compounds and phosphoric acid, and therefore a means is provided for reinforcing their effect as anti-corrosion films containing no hexavalent chromium.

**Table 17**

| Sample No. | Treatment agent | | Metal material and film forming method | Worked part follow-up property | Corrosion resistance | |
|---|---|---|---|---|---|---|
| | Phosphoric acid molar ratio | Lanthanum concentration (mol/kg) | | | Flat parts | Worked parts |
| 201 | 1.0(d) | 2.4(a,h) | GI(P) | ○ | ○ | ○ |
| 202 | 1.0(d) | 1.5(a) | GI(P) | ○ | ○ | ○ |
| 203 | 3.0(d) | 1.05(a) | GI(P) | ○ | ○ | ○ |
| | | | EG(P) | ○ | ⓞ | ○ |
| | | | AL(P) | ○ | ○ | ○ |
| 204 | 3.0(d) | 0.5(a) | GI(P) | ⓞ | ○ | ○ |
| | | | EG(P) | ⓞ | ⓞ | ○ |
| | | | AL(P) | ⓞ | ○ | ○ |
| 205 | 4.0(e) | 1.0(a) | GI(P) | ⓞ | ⓞ | ⓞ |
| | | | EG(P) | ⓞ | ⓞ | ⓞ |
| | | | AL(P) | ⓞ | ⓞ | ⓞ |
| 206 | 5.0(d) | 0.64(a) | GI(P) | ⓞ | ⓞ | ⓞ |
| 207 | 5.0(d) | 0.3(a) | GI(P) | ⓞ | ○ | ○ |
| | | | EG(P) | ⓞ | ⓞ | ○ |
| | | | AL(P) | ⓞ | ○ | ○ |
| | | | cold-rolled steel sheet (P) | - | ○ | - |
| | | | aluminum sheet (P) | - | ○ | - |
| 208 | 5.0(d,f) | 0.3(a) | GI(P) | ○ | ○ | ○ |
| 209 | 5.0(d,g) | 0.3(a) | EG(P) | ○ | ○ | ○ |
| 210 | 10 (e) | 0.5(a) | GI(P) | ⓞ | ⓞ | ○ |
| 211 | 10 (e,f) | 0.5(b,c) | EG(P) | ⓞ | ⓞ | ○ |
| 212 | 10 (e,f) | 0.5(c) | EG(P) | ⓞ | ⓞ | ○ |
| 213 | 10 (e) | 0.2(c) | GI(S) | ⓞ | ○ | ○ |
| 214 | 10 (e,f) | 0.2(c,h) | GI(S) | ⓞ | ○ | ○ |
| | | | EG(S) | ⓞ | ○ | ○ |
| | | | AL(S) | ⓞ | ○ | ○ |
| 215 | 10 (e,f) | 0.1 | EI(S) | ⓞ | ○ | ○ |
| 216 | 10 (e) | 0.06(a) | GI(D) | ○ | ○ | ○ |
| 217 | 25 (d) | 0.11(c) | GI(D) | ○ | ○ | Δ |
| | | | EG(D) | ○ | ○ | Δ |
| Comp. Ex. 201 | 15 (d) | 0.01 | GI(D) | Δ | x | x |
| | | | EG(D) | Δ | x | x |
| 202 | chromate treated | - | GI(P) | Δ | ○ | Δ |
| | | | EG(P) | ○ | ○ | Δ |
| | | | AL(P) | ○ | ○ | Δ |

**Table 18**

| Sample No. | Cerium compound and molar ratio to La | Organic inhibitor and molar ratio to La | Metal material and film forming method | Worked part follow-up property | Corrosion resistance | |
|---|---|---|---|---|---|---|
| | | | | | Flat parts | Worked parts |
| 218 | CePO₄ 1.0 | none | GI(P) | ⓞ | ⓞ | ○ |
| | CePO₄ 1.0 | PFDP 0.01 | GI(P) | ⓞ | ⓞ | ⓞ |
| | CePO₄ 1.0 | TGO 0.01 | GI(P) | ⓞ | ⓞ | ○ |
| | CePO₄ 1.0 | MLA 0.01 | GI(P) | ⓞ | ⓞ | ○ |
| | CePO₄ 1.0 | MBA 0.01 | GI(P) | ⓞ | ⓞ | ⓞ |
| | CePO₄ 1.0 | MNA 0.01 | GI(P) | ⓞ | ⓞ | ⓞ |
| | CePO₄ 1.0 | HOQ 0.01 | GI(P) | ⓞ | ⓞ | ○ |
| 219 | none | PFDP 0.5 | GI(P) | ⓞ | ⓞ | ○ |
| 220 | CeO₂ 0.01 | none | GI(P) | ⓞ | ⓞ | ○ |
| 221 | Ce(OH)₃ 0.01 | none | GI(P) | ⓞ | ⓞ | ○ |
| 222 | Ce(NO₃)₃ 0.5 | none | GI(P) | ⓞ | ⓞ | ⓞ |
| | | | EG(P) | ⓞ | ⓞ | ⓞ |
| | | | AL(P) | ⓞ | ⓞ | ⓞ |
| 223 | Ce(NO₃)₃ 0.3 | PFDP 0.2 | GI(P) | ⓞ | ⓞ | ⓞ |
| | | | EG(P) | ⓞ | ⓞ | ⓞ |
| | | | AL(P) | ⓞ | ⓞ | ⓞ |
| 224 | Ce(NO₃)₃ 0.3 | MNA 0.2 | GI(P) | ⓞ | ⓞ | ⓞ |
| | | | EG(P) | ⓞ | ⓞ | ⓞ |
| | | | AL(P) | ⓞ | ⓞ | ⓞ |

**Table 19**

| Sample No. | Treatment agent | | Metal material and film forming method | Worked part follow-up property | Corrosion resistance | |
|---|---|---|---|---|---|---|
| | Phosphoric acid molar ratio | Cerium concentration (mol/kg) | | | Flat parts | Worked parts |
| 225 | 0.8(n) | 2.4(i,r) | GI(P) | Δ | ○ | Δ |
| 226 | 1.0(n) | 1.5(j) | GI(P) | ○ | ○ | ○ |
| 227 | 3.0(n) | 1.05(j) | GI(P) | ○ | ○ | ○ |
| | | | EG(P) | ○ | ○ | ○ |
| | | | AL(P) | ○ | ○ | ○ |
| 228 | 3.0(n) | 0.5(k) | GI(P) | ○ | ○ | ○ |
| | | | EG(P) | ○ | ⓞ | ○ |
| | | | AL(P) | ○ | ○ | ○ |
| 229 | 4.0(o) | 1.0(k) | GI(P) | ○ | ⓞ | ○ |
| | | | EG(P) | ○ | ⓞ | ○ |
| | | | AL(P) | ○ | ⓞ | ○ |
| 230 | 5.0(n) | 0.64(j) | GI(P) | ○ | ⓞ | ○ |
| 231 | 5.0(n) | 0.3(j) | GI(P) | ○ | ○ | ○ |
| | | | EG(P) | ○ | ○ | ○ |
| | | | AL(P) | ○ | ○ | ○ |
| | | | cold-rolled steel sheet (P) | - | ○ | - |
| | | | aluminum sheet (P) | - | ○ | - |
| 232 | 5.0(n,p) | 0.3(j) | GI(P) | ○ | ○ | ○ |
| 233 | 5.0(n,q) | 0.3(j) | EG(P) | ○ | ○ | ○ |
| 234 | 10 (o) | 0.5(k) | GI(P) | ⓞ | ⓞ | ○ |
| 235 | 10 (o) | 0.5(k,l) | EG(P) | ⓞ | ⓞ | ○ |
| 236 | 10 (o) | 0.5(k,m) | EG(P) | ⓞ | ⓞ | ○ |
| 237 | 10 (o) | 0.2(k) | GI(S) | ⓞ | ○ | ○ |
| 238 | 10 (o) | 0.2(k,r) | EG(S) | ⓞ | ○ | ○ |
| 239 | 10 (o) | 0.1(j) | GI(D) | ○ | ○ | ○ |
| 240 | 10 (n) | 0.06(j) | GI(D) | ○ | ○ | Δ |
| 241 | 25 (n) | 0.11(k) | EG(D) | ○ | ○ | Δ |
| Comp. Ex. 203 | cathode deposition | - | EG | X | Δ | X |

**Table 20**

| Sample No. | Lanthanum compound and molar ratio to Ce | Organic-based corrosion inhibitor and molar ratio to Ce | Metal material and film-forming method | Worked part follow-up property | Corrosion resistance | |
|---|---|---|---|---|---|---|
| | | | | | Flat parts | Worked parts |
| 242 | LaPO₄ 0.8 | none | GI(P) | ⓞ | ⓞ | ○ |
| | LaPO₄ 0.8 | PFDP 0.01 | GI(P) | ⓞ | ⓞ | ⓞ |
| | LaPO₄ 0.8 | TGO 0.01 | GI(P) | ⓞ | ⓞ | ○ |
| | LaPO₄ 0.8 | MLA 0.01 | GI(P) | ⓞ | ⓞ | ○ |
| | LaPO₄ 0.8 | MBA 0.01 | GI(P) | ⓞ | ⓞ | ⓞ |
| | LaPO₄ 0.8 | MNA 0.01 | GI(P) | ⓞ | ⓞ | ⓞ |
| | LaPO₄ 0.8 | HOQ 0.01 | GI(P) | ⓞ | ⓞ | ○ |
| 243 | none | PFDP 0.5 | GI(P) | ○ | ⓞ | ○ |
| 244 | La₂O₃ 0.01 | none | GI(P) | ○ | ⓞ | ○ |
| 245 | La(OH)₃ 0.01 | none | GI(P) | ○ | ⓞ | ○ |
| 246 | LaCl₃ | none | GI(P) | ⓞ | ⓞ | ⓞ |
| | | | EG(P) | ⓞ | ⓞ | ⓞ |
| | | | AL(P) | ⓞ | ⓞ | ⓞ |
| 247 | LaCl₃ | PFDP 0.2 | GI(P) | ⓞ | ⓞ | ⓞ |
| | | | EG(P) | ⓞ | ⓞ | ⓞ |
| | | | AL(P) | ⓞ | ⓞ | ⓞ |
| 248 | LaCl₃ 0.3 | MNA 0.2 | GI(P) | ⓞ | ⓞ | ⓞ |
| | | | EG(P) | ⓞ | ⓞ | ⓞ |
| | | | AL(P) | ⓞ | ⓞ | ⓞ |

## Claims

1. A surface treated metal material **characterized by** having a corrosion resistant coating layer comprised mainly of a hydrogen oxyacid compound of a rare earth element or a mixture of a hydrogen oxyacid compound and oxyacid compound of a rare earth element on the surface of a metal material, the corrosion resistant coating layer having a molar ratio of the sum of hydrogen oxyacid and oxyacid to the rare earth element in a range of from 2 to 100 and a thickness of 0.1 to 5µm.

2. A surface treated metal material according to claim 1, wherein said rare earth element is yttrium, lanthanum and/or cerium.

3. A surface treated metal material according to claim 1 or claim 2, wherein the anion species of said oxyacid compound and said hydrogen oxyacid compound is a polyvalent oxyacid anion.

4. A surface treated metal material according to claim 3, wherein said anion species is phosphate ion, tungstate ion, molybdate ion and/or vanadate ion.

5. A surface treated metal material according to claim 1, wherein said corrosion resistant coating layer is comprised mainly of an hydrogen oxyacid compound of yttrium, lanthanum and/or cerium or a mixture thereof or a mixture of a hydrogen oxyacid compound and oxyacid compound of yltrium, lonthanum and/or cerium or a mixture thereof.

6. A surface treated metal material according to claim 5, wherein said phosphate compound and said hydrogen phosphate compound is an ortho-(hydrogen) phosphate compound, meta-phosphate compound or poly-(hydrogen)phosphate compound, or a mixture thereof.

7. A surface treated metal material according to any of claims 1 to 6, wherein said corrosion resistant coating layer further contains as an added component one or more compounds selected from among oxides, hydroxides, halides and organic acid compounds of rare earth elements.

8. A surface treated metal material according to claim 7, wherein said rare earth element of said added component is cerium.

9. A surface treated metal material according to claim 8, wherein said rare earth element of said added component is tetravalent cerium.

10. A surface treated metal material according to any of claims 1 to 9, wherein said corrosion resistant coating further contains as an added component an organic-based corrosion inhibitor.

11. A surface treated metal material according to claim 10, wherein said organic-based corrosion inhibitor is one or more compounds selected from the group consisting of formylated derivatives of N-phenyl-dimethylpyrrole, thioglycolic acid esters represented by HS-CH₂COOCₙCH₂ₙ₊₁ (n is an integer of 1-25) and their derivatives, α-mercaptocarboxylic acids represented by CₙH₂ₙ(SH) COOH (n is an integer of 1-25) and their derivatives, quinoline and its derivatives, triazinedithiol and its derivatives, gallic acid esters and their derivatives, nicotinic acid and its derivatives, catechol and its derivatives and/or conductive polymers.

12. A surface treated metal material according to any of claims 1 to 11, wherein said corrosion resistant coating layer further contains one or more compounds selected from the group consisting of SiO₂, Cr₂O₃, Cr(OH)₃, Al₂O₃, calcium hydroxide, calcium carbonate, calcium oxide, zinc phosphate, zinc hydrogen phosphate, potassium phosphate, potassium hydrogen phosphate, calcium phosphate, calcium hydrogen phosphate, calcium silicate, zirconium silicate, aluminum phosphate, aluminum hydrogen phosphate, titanium oxide, zirconium phosphate, zirconium hydrogen phosphate, sulfuric acid, sodium sulfate, sodium hydrogen sulfate, phosphoric acid, sodium phosphate and sodium hydrogen phosphate.

13. A surface treatment agent for forming corrosion resistant coating layers on the surface of metal materials, **characterized by** being composed mainly of a hydrogen oxyacid compound of a rare earth element or a mixture of a hydrogen oxyacid compound and oxyacid compound of a rare earth element, wherein said surface treatment agent contains 0.05 to 4 mol/kg of the rare earth compound in terms of the rare earth element and 2 to 100 moles of the hydrogen oxyacid or a mixture of the hydrogen oxyacid and oxyacid in terms of oxyacid per one mole of the rare earth element.

14. A surface treatment agent according to claim 13, wherein said rare earth element is yttrium, lanthanum and/or cerium.

15. A surface treatment agent according to claim 13 or 14, wherein the anion species of said oxyacid compound and said hydrogen oxyacid compound is a polyvalent oxyacid anion.

16. A surface treatment agent according to claim 15, wherein said anion species is phosphate ion, tungstate ion, molybdate ion and/or vanadate ion.

17. A surface treatment agent according to claim 13, wherein said corrosion resistant coating layer is composed mainly of a hydrogen phosphate compound of yttrium, lanthanum and/or cerium, or a mixture thereof.

18. A surface treatment agent according to claim 17, wherein said hydrogen phosphate compound is an ortho-(hydrogen)phosphate compound, meta-phosphate compound or poly-(hydrogen) phosphate compound, or a mixture thereof.

19. A surface treatment agent according to any of claims 13 to 18, wherein said corrosion resistant coating layer further contains as an added component one or more compounds selected from among oxides, hydroxides, halides and organic acid compounds of rare earth elements.

20. A surface treatment agent according to claim 19, wherein said rare earth element of said added component is cerium.

21. A surface treatment agent according to claim 20, wherein said rare earth element of said added component is tetravalent cerium.

22. A surface treatment agent according to any of claims 13 to 21, wherein said corrosion resistant coating further contains as an added component an organic-based corrosion inhibitor.

23. A surface treatment agent according to claim 22, wherein said organic-based corrosion inhibitor is one or more compounds selected from the group consisting of formylated derivatives of N-phenyl-dimethylpyrrole, thioglycolic acid esters represented by HS-CH₂COOCₙCH₂ₙ₊₁ (n is an integer of 1-25) and their derivatives, α-mercaptocarboxylic acids represented by CₙH₂ₙ(SH)COOH (n is an integer of 1-25) and their derivatives, quinoline and its derivatives, triazinedithiol and its derivatives, gallic acid esters and their derivatives, nicotinic acid and its derivatives, catechol and its derivatives and/or conductive polymers.

24. A surface treatment agent according to any of claims 13 to 23, wherein said corrosion resistant coating layer further contains one or more compounds selected from the group consisting of SiO₂, Cr₂O₃, Cr(OH)₃, Al₂O₃, calcium hydroxide, calcium carbonate, calcium oxide, zinc phosphate, zinc hydrogen phosphate, potassium phosphate, potassium hydrogen phosphate, calcium phosphate, calcium hydrogen phosphate, calcium silicate, zirconium silicate, aluminum phosphate, aluminum hydrogen phosphate, titanium oxide, zirconium phosphate, zirconium hydrogen phosphate, sulfuric acid, sodium sulfate, sodium hydrogen sulfate, phosphoric acid, sodium phosphate and sodium hydrogen phosphate.

25. A surface treatment agent according to any of claims 13 to 26, wherein said rare earth element compound is a phosphate compound, hydrogen phosphate compound, oxide or hydroxide of lanthanum or cerium, or a mixture thereof.

26. A surface treatment agent according to any of claims 13 to 25 or 26, wherein the phosphate is an ortho-phosphate, meta-phosphate or poly-phosphate, or a mixture thereof.

27. A surface treatment agent according to any of claims 13 to 26, which contains water or a mixture of water and a water-soluble organic solvent as a diluting agent.

28. A surface treatment agent according to any of claims 13 to 27, wherein said rare earth element compound is a lanthanum compound, and which further contains a cerium compound in a molar ratio of 1.0-0.001 in terms of cerium to lanthanum and/or an organic-based corrosion inhibitor in a molar ratio of 2-0.001 to lanthanum.

29. A surface treatment agent according to any of claims 13 to 27, wherein said rare earth element compound is a cerium compound, and which further contains a lanthanum compound in a molar ratio of 1.0-0.001 in terms of lanthanum to cerium and/or an organic-based corrosion inhibitor in a molar ratio of 2-0.001 to lanthanum.

## Patentansprüche

1. Oberflächenbehandelter metallischer Werkstoff, **dadurch gekennzeichnet, daß** er eine korrosionsbeständige Oberflächenschicht aufweist, die hauptsächlich aus einer Hydrogen-Oxosäureverbindung eines Seltenerdelements oder einer Mischung aus einer Hydrogen-Oxosäureverbindung und einer Oxosäureverbindung eines Seltenerdelements auf der Oberfläche eines metallischen Werkstoffes besteht, wobei die korrosionsbeständige Oberflächenschicht ein Molverhältnis der Summe der Hydrogen-Oxosäure und Oxosäure zu dem Seltenerdelement in einem Bereich von 2 bis 100 und eine Dicke von 0,1 bis 5 µm aufweist.

2. Oberflächenbehandelter metallischer Werkstoff gemäß Anspruch 1, wobei das Seltenerdelement Yttrium, Lanthan und/oder Cer ist.

3. Oberflächenbehandelter metallischer Werkstoff gemäß Anspruch 1 oder Anspruch 2, wobei die Anionspezies der Oxosäureverbindung und der Hydrogen-Oxosäureverbindung ein mehrwertiges Oxosäureanion ist.

4. Oberflächenbehandelter metallischer Werkstoff gemäß Anspruch 3, wobei die Anionspezies ein Phosphation, Wolframation, Molybdation und/oder Vanadation ist.

5. Oberflächenbehandelter metallischer Werkstoff gemäß Anspruch 1, wobei die korrosionsbeständige Oberflächenschicht hauptsächlich aus einer Hydrogen-Oxosäureverbindung von Yttrium, Lanthan und/oder Cer oder einer Mischung von diesen, oder einer Mischung einer Hyrogen-Oxosäureverbindung und Oxosäureverbindung von Yttrium, Lanthan, und/oder Cer oder einer Mischung von diesen besteht.

6. Oberflächenbehandelter metallischer Werkstoff gemäß Anspruch 5, wobei die Phosphatverbindung und die Hydrogen-Phosphatverbindung eine Ortho-(Hydrogen)-Phosphatverbindung, Meta-Phosphatverbindung oder Poly-(Hydrogen)-Phosphatverbindung oder eine Mischung von diesen ist.

7. Oberflächenbehandelter metallischer Werkstoff gemäß einem der Ansprüche 1 bis 6, wobei die korrosionsbeständige Oberflächenschicht zusätzlich als zugegebene Komponente eine oder mehrere aus Oxiden, Hydroxiden, Halogeniden und organischen Säureverbindungen von Seltenerdelementen ausgewählte Verbindungen enthält.

8. Oberflächenbehandelter metallischer Werkstoff gemäß Anspruch 7, wobei das Seltenerdelement der zugegebenen Komponente Cer ist.

9. Oberflächenbehandelter metallischer Werkstoff gemäß Anspruch 8, wobei das Seltenerdelement der zugegebenen Komponente vierwertiges Cer ist.

10. Oberflächenbehandelter metallischer Werkstoff gemäß einem der Ansprüche 1 bis 9, wobei die korrosionsbeständige Schicht ferner als zugegebene Komponente einen Korrosions-Inhibitor auf organischer Basis enthält.

11. Oberflächenbehandelter metallischer Werkstoff gemäß Anspruch 10, wobei der Korrosions-Inhibitor auf organischer Basis eine oder mehrere Verbindungen aus der Gruppe der formylierten Derivate von N-Phenyl-Dimethylpyrrol, Thioglycolsäureestern der Formel HS-CH₂COOCₙCH₂ₙ₊₁ (n ist eine ganze Zahl von 1-25) und ihren Derivaten, α-Mercapto-Carbonsäuren der Formel CₙH₂ₙ(SH)COOH (n ist eine ganze Zahl von 1-25) und ihren Derivaten, Chinolin und seinen Derivaten, Triazindithiol und seinen Derivaten, Gallensäure-Estern und ihren Derivaten, Nikotinsäure und ihrer Derivate, Brenzcatechin und seinen Derivaten und/oder leitfähigen Polymeren ist.

12. Oberflächenbehandelter metallischer Werkstoff gemäß einem der Ansprüche 1 bis 11, wobei die korrosionsbeständige Oberflächenschicht weiterhin eine oder mehrere aus der Gruppe SiO₂, Cr₂O₃, Cr(OH)₃, Al₂O₃, Calciumhydroxid, Calciumcarbonat, Calciumoxid, Zinkphosphat, Zinkhydrogenphosphat, Kaliumphosphat, Kaliumhydrogenphosphat, Calciumphosphat, Calciumhydrogenphosphat, Calciumsilikat, Zirkonsilikat, Aluminiumphosphat, Aluminiumhydrogenphosphat, Titanoxid, Zirkonphosphat, Zirkonhydrogenphosphat, Schwefelsäure, Natriumsulfat, Natriumhydrogensulfat, Phosphorsäure, Natriumphosphat und Natriumhydrogenphosphat ausgewählte Verbindungen enthält.

13. Mittel für die Oberflächenbehandlung zur Erzeugung von korrosionsbeständigen Oberflächenschichten auf der Oberfläche von metallischen Werkstoffen, **dadurch gekennzeichnet, daß** es hauptsächlich aus einer Hydrogen-Oxosäureverbindung eines Seltenerdelements oder einer Mischung aus einer Hydrogen-Oxosäureverbindung und einer Oxosäureverbindung eines Seltenerdelements besteht, wobei das Mittel zur Oberflächenbehandlung 0,05 bis 4 mol/kg der Seltenerdverbindung, bezogen auf das Seltenerdelement und 2 bis 100 mol der Hydrogen-Oxosäure oder einer Mischung aus der Hydrogen-Oxosäure und der Oxosäure, bezogen auf die Oxosäure, pro einem Mol des Seltenerdelements enthält.

14. Mittel zur Oberflächenbehandlung gemäß Anspruch 13, wobei das Seltenerdelement Yttrium, Lanthan und/oder Cer ist.

15. Mittel zur Oberflächenbehandlung gemäß Anspruch 13 oder 14, wobei die Anionspezies der Oxosäureverbindung und der Hydrogen-Oxosäureverbindung ein mehrwertiges Oxosäureanion ist.

16. Mittel zur Oberflächenbehandlung gemäß Anspruch 15, wobei die Anionspezies ein Phosphation, Wolframation, Molybdation und/oder Vanadation ist.

17. Mittel zur Oberflächenbehandlung gemäß Anspruch 13, wobei die korrosionsbeständige Oberflächenschicht hauptsächlich aus einer Hydrogen-Phosphatverbindung von Yttrium, Lanthan und/oder Cer oder einer Mischung davon besteht.

18. Mittel zur Oberflächenbehandlung gemäß Anspruch 17, wobei die Hydrogen-Phosphatverbindung eine Ortho-(Hydrogen)-Phosphatverbindung, Meta-Phosphatverbindung oder Poly-(Hydrogen)-Phosphatverbindung oder eine Mischung davon ist.

19. Mittel zur Oberflächenbehandlung gemäß einem der Ansprüche 13 bis 18, wobei die korrosionsbeständige Oberflächenschicht zusätzlich als zugegebene Komponente eine oder mehrere aus Oxiden, Hydroxiden, Halogeniden und organischen Säureverbindungen der Seltenerdelemente ausgewählte Verbindungen enthält.

20. Mittel zur Oberflächenbehandlung gemäß Anspruch 19, wobei das Seltenerdelement der zugegebenen Komponente Cer ist.

21. Mittel zur Oberflächenbehandlung gemäß Anspruch 20, wobei das Seltenerdelement der zugegebenen Komponente vierwertiges Cer ist.

22. Mittel zur Oberflächenbehandlung gemäß einem der Ansprüche 13 bis 21, wobei die korrosionsbeständige Schicht ferner als zugegebene Verbindung einen Korrosions-Inhibitor auf organischer Basis enthält.

23. Mittel zur Oberflächenbehandlung gemäß Anspruch 22, wobei der Korrosions-Inhibitor auf organischer Basis eine oder mehrere Verbindungen aus der Gruppe der formylierten Derivate von N-Phenyl-Dimethyl-Pyrrol, Thio-Glycolsäure-Estern der Formel HS-CH₂COOCₙCH₂ₙ₊₁ (n ist eine ganze Zahl von 1-25) und ihren Derivaten, α-Mercapto-Carbonsäuren der Formel CₙH₂ₙ(SH)COOH (wobei n eine ganze Zahl von 1-25 ist)und ihren Derivaten, Chinolin und seinen Derivaten, Triazindithiol und seinen Derivaten, Gallensäure-Estern und ihren Derivaten, Nikotinsäure und ihrer Derivate, Brenzcatechin und seinen Derivaten und/oder leitfähigen Polymeren ist.

24. Mittel zur Oberflächenbehandlung gemäß einem der Ansprüche 13 bis 23, wobei die korrosionsbeständige Oberflächenschicht weiterhin eine oder mehrere aus der Gruppe SiO₂, Cr₂O₃, Cr(OH)₃, Al₂O₃, Calciumhydroxid, Calciumcarbonat, Calciumoxid, Zinkphosphat, Zinkhydrogenphosphat, Kaliumphosphat, Kaliumhydrogenphosphat, Calciumphosphat, Calciumhydrogenphosphat, Calciumsilikat, Zirkonsilikat, Aluminiumphosphat, Aluminiumhydrogenphosphat, Titanoxid, Zirkonphosphat, Zirkonhydrogenphosphat, Schwefelsäure, Natriumsulfat, Natriumhydrogensulfat, Phosphorsäure, Natriumphosphat und Natriumhydrogenphosphat ausgewählte Verbindungen enthält.

25. Mittel zur Oberflächenbehandlung gemäß einem der Ansprüche 13 bis 24, wobei die Seltenerdverbindung eine Phosphatverbindung, Hydrogenphosphatverbindung, Oxid oder Hydroxid von Lanthan oder Cer ist, oder eine Mischung davon.

26. Mittel zur Oberflächenbehandlung gemäß einem der Ansprüche 13 bis 25, wobei das Phosphat ein Orthophosphat, Metaphosphat oder Polyphosphat ist oder eine Mischung davon.

27. Mittel zur Oberflächenbehandlung gemäß einem der Ansprüche 13 bis 26, das Wasser oder eine Mischung aus Wasser und einem wasserlöslichen organischen Lösungsmittel als Verdünnungsmittel enthält.

28. Mittel zur Oberflächenbehandlung gemäß einem der Ansprüche 13 bis 27, wobei die Seltenerdelementverbindung eine Lanthanverbindung ist, und welches weiterhin eine Cerverbindung in einem Molverhältnis von 1,0-0,001 bezogen auf Cer zu Lanthan und/oder einen Korrosions-Inhibitor auf organischer Basis in einem Molverhältnis von 2-0,001 zu Lanthan enthält.

29. Mittel zur Oberflächenbehandlung gemäß einem der Ansprüche 13 bis 27, wobei die Seltenerdverbindung eine Cerverbindung ist, und welches weiterhin eine Lanthanverbindung in einem Molverhältnis von 1,0-0,001 bezogen auf Lanthan zu Cer und/oder einen Korrosions-Inhibitor auf organischer Basis in einem Molverhältnis von 2-0,001 zu Lanthan enthält.

## Revendications

1. Matériau métallique à traitement de surface **caractérisé en ce qu'**il possède une couche de revêtement résistant à la corrosion comprenant principalement un composé oxyacide d'hydrogène d'un élément de terres rares ou un mélange d'un composé oxyacide d'hydrogène et d'un composé oxyacide d'un élément de terres rares sur la surface d'un matériau métallique, la couche de revêtement résistant à la corrosion ayant un rapport molaire de la somme de l'oxyacide d'hydrogène et de l'oxyacide sur l'élément de terres rares dans une plage de 2 à 100 et une épaisseur de 0,1 à 5 µm.

2. Matériau métallique à traitement de surface selon la revendication 1, dans lequel ledit élément de terres rares est de l'yttrium, du lanthane et/ou du cérium.

3. Matériau métallique à traitement de surface selon la revendication 1 ou la revendication 2, dans lequel l'espèce de l'anion dudit composé oxyacide et dudit composé oxyacide d'hydrogène est un anion oxyacide polyvalent.

4. Matériau métallique à traitement de surface selon la revendication 3, dans lequel ladite espèce de l'anion est ion phosphate, ion tungstate, ion molybdate et/ou ion vanadate.

5. Matériau métallique à traitement de surface selon la revendication 1, dans lequel ladite couche de revêtement résistant à la corrosion comprend principalement un composé oxyacide d'hydrogène d'yttrium, de lanthane et/ou de cérium ou d'un mélange de ceux-ci ou bien un mélange d'un composé oxyacide d'hydrogène et d'un composé oxyacide d'yttrium, de lanthane et/ou de cérium ou d'un mélange de ceux-ci.

6. Matériau métallique à traitement de surface selon la revendication 5, dans lequel ledit composé de phosphate et ledit composé de phosphate d'hydrogène est un composé d'ortho(hydrogène)phosphate, un composé de métaphosphate ou un composé de poly(hydrogène)phosphate, ou un mélange de ceux-ci.

7. Matériau métallique à traitement de surface selon l'une quelconque des revendications 1 à 6, dans lequel ladite couche de revêtement résistant à la corrosion contient en outre en tant que composant ajouté un ou plusieurs composés choisis parmi les oxydes, hydroxydes, halogénures et les composés acides organiques d'éléments de terres rares.

8. Matériau métallique à traitement de surface selon la revendication 7, dans lequel ledit élément de terres rares dudit composant ajouté est du cérium.

9. Matériau métallique à traitement de surface selon la revendication 8, dans lequel ledit élément de terres rares dudit composant ajouté est du cérium tétravalent.

10. Matériau métallique à traitement de surface selon l'une quelconque des revendications 1 à 9, dans lequel ledit revêtement résistant à la corrosion contient en outre en tant que composant ajouté un inhibiteur de corrosion organique.

11. Matériau métallique à traitement de surface selon la revendication 10, dans lequel ledit inhibiteur de corrosion organique est un ou plusieurs composés choisis dans le groupe comprenant les dérivés formylés de N-phényl-diméthylpyrrole, les esters d'acide thioglycolique représentés par HS-CH₂COOCₙCH₂ₙ₊₁ (n est un entier de 1 à 25) et leurs dérivés, les acides α-mercaptocarboxyliques représentés par CₙH₂ₙ(SH)COOH (n est un entier de 1 à 25) et leurs dérivés, la quinoline et ses dérivés, le triazinédithiol et ses dérivés, les esters d'acide gallique et leurs dérivés, l'acide nicotinique et ses dérivés, le catéchol et ses dérivés et/ou les polymères conducteurs.

12. Matériau métallique à traitement de surface selon l'une quelconque des revendications 1 à 11, dans lequel ladite couche de revêtement résistant à la corrosion contient en outre un ou plusieurs composés choisis dans le groupe comprenant le SiO₂, le Cr₂O₃, le Cr(OH)₃, l'Al₂O₃, l'hydroxyde de calcium, le carbonate de calcium, l'oxyde de calcium, le phosphate de zinc, l'hydrogénophosphate de zinc, le phosphate de potassium, l'hydrogénophosphate de potassium, le phosphate de calcium, l'hydrogénophosphate de calcium, le silicate de calcium, le silicate de zirconium, le phosphate d'aluminium, l'hydrogénophosphate d'aluminium, l'oxyde de titane, le phosphate de zirconium, l'hydrogénophosphate de zirconium, l'acide sulfurique, le sulfate de sodium, l'hydrogénosulfate de sodium, l'acide phosphorique, le phosphate de sodium et l'hydrogénophosphate de sodium.

13. Agent de traitement de surface pour former des couches de revêtement résistant à la corrosion sur la surface de matériaux métalliques, **caractérisé en ce qu'**il comprend principalement un composé oxyacide d'hydrogène d'un élément de terres rares ou un mélange d'un composé oxyacide d'hydrogène et d'un composé oxyacide d'un élément de terres rares, dans lequel ledit agent de traitement de surface contient 0,05 à 4 mol/kg de composé de terres rares en termes de l'élément de terres rares et 2 à 100 moles de l'oxyacide d'hydrogène ou d'un mélange de l'oxyacide d' hydrogène et de l'oxyacide en termes d'oxyacide pour une mole de l'élément de terres rares.

14. Agent de traitement de surface selon la revendication 13, dans lequel ledit élément de terres rares est de l'yttrium, du lanthane et/ou du cérium.

15. Agent de traitement de surface selon la revendication 13 ou 14, dans lequel l'espèce de l'anion dudit composé oxyacide et dudit composé oxyacide d'hydrogène est un anion oxyacide polyvalent.

16. Agent de traitement de surface selon la revendication 15, dans lequel ladite espèce de l'anion est ion phosphate, ion tungstate, ion molybdate et/ou ion vanadate.

17. Agent de traitement de surface selon la revendication 13, dans lequel ladite couche de revêtement résistant à la corrosion comprend principalement un composé d'hydrogénophosphate d'yttrium, lanthane et/ou cérium ou d'un mélange de ceux-ci.

18. Agent de traitement de surface selon la revendication 17, dans lequel ledit composé d'hydrogénophosphate est un composé d'orto(hydrogène)phosphate, un composé de métaphosphate ou un composé de poly(hydrogène)phosphate ou un mélange de ceux-ci.

19. Agent de traitement de surface selon l'une quelconque des revendications 13 à 18, dans lequel ladite couche de revêtement résistant à la corrosion comprend en outre en tant que composant ajouté un ou plusieurs composés choisis parmi les oxydes, hydroxydes, halogénures et les composés acides organiques d'éléments de terres rares.

20. Agent de traitement de surface selon la revendication 19, dans lequel ledit élément de terres rares dudit composant ajouté est du cérium.

21. Agent de traitement de surface selon la revendication 20, dans lequel ledit élément de terres rares dudit composant ajouté est du cérium tétravalent.

22. Agent de traitement de surface selon l'une quelconque des revendications 13 à 21, dans lequel ledit revêtement résistant à la corrosion contient en outre en tant que composant ajouté un inhibiteur de corrosion organique.

23. Agent de traitement de surface selon la revendication 22, dans lequel ledit inhibiteur de corrosion organique est un ou plusieurs composés choisis parmi le groupe comprenant les dérivés formylés de N-phényl-diméthylpyrrole, les esters d'acide thioglycolique représentés par HS-CH₂COOCₙCH₂ₙ₊₁ (n est un entier de 1 à 25) et leurs dérivés, les acides α-mercaptocarboxyliques représentés par CₙH₂ₙ(SH)COOH (n est un entier de 1 à 25) et leurs dérivés, la quinoline et ses dérivés, le triazinédithiol et ses dérivés, les esters d'acide gallique et leurs dérivés, l'acide nicotinique et ses dérivés, le catéchol et ses dérivés et/ou les polymères conducteurs.

24. Agent de traitement de surface selon l'une quelconque des revendications 13 à 23, dans lequel ladite couche de revêtement résistant à la corrosion contient en outre un ou plusieurs composés choisis dans le groupe comprenant le SiO₂, le Cr₂O₃, le Cr (OH) ₃, le Al₂O₃, l'hydroxyde de calcium, le carbonate de calcium, l'oxyde de calcium, le phosphate de zinc, l'hydrogénophosphate de zinc, le phosphate de potassium, l'hydrogénophosphate de potassium, le phosphate de calcium, l'hydrogénophosphate de calcium, le silicate de calcium, le silicate de zirconium, le phosphate d'aluminium, l'hydrogénophosphate d'aluminium, l'oxyde de titane, le phosphate de zirconium, l'hydrogénophosphate de zirconium, l'acide sulfurique, le sulfate de sodium, l'hydrogénosulfate de sodium, l'acide phosphorique, le phosphate de sodium et l'hydrogénophosphate de sodium.

25. Agent de traitement de surface selon l'une quelconque des revendications 13 à 24, dans lequel ledit composé d'éléments de terres rares est un composé de phosphate, un composé d'hydrogénophosphate, un oxyde ou hydroxyde de lanthane ou de cérium, ou un mélange de ceux-ci.

26. Agent de traitement de surface selon l'une quelconque des revendications 13 à 25, dans lequel le phosphate est un orthophosphate, métaphosphate ou polyphosphate, ou un mélange de ceux-ci.

27. Agent de traitement de surface selon l'une quelconque des revendications 13 à 26, qui contient de l'eau ou un mélange d'eau et d'un solvant organique hydrosoluble en tant qu'agent de dilution.

28. Agent de traitement de surface selon l'une quelconque des revendications 13 à 27, dans lequel ledit composé d'éléments de terres rares est un composé de lanthane, et qui contient en outre un composé de cérium dans un rapport molaire de 1,0-0,001 en termes de cérium par rapport au lanthane et/ou un inhibiteur de corrosion organique dans un rapport molaire de 2-0,001 par rapport au lanthane.

29. Agent de traitement de surface selon l'une quelconque des revendications 13 à 27, dans lequel ledit composé d'éléments de terres rares est un composé de cérium, et qui contient en outre un composé de lanthane dans un rapport molaire de 1,0-0,001 en termes de lanthane par rapport au cérium et/ou un inhibiteur de corrosion organique dans un rapport molaire de 2-0,001 par rapport au lanthane.
